# EUROPEAN PATENT SPECIFICATION

(11) **EP 3 991 871 B1**
(45) Date of publication and mention of the grant of the patent: **05.03.2025**
(21) Application number: 21204776.5
(22) Date of filing: 26.10.2021
(51) Int. Cl.: B21D 11/20, B21D 53/00, B63B 73/60, G05B 19/00, G05B 19/4099

(54) **AUTOMATIC CURVED PLATE FORMING APPARATUS**
AUTOMATISCHES FORMGEBUNGSGERÄT FÜR GEBOGENE PLATTEN
APPAREIL DE FORMAGE AUTOMATIQUE DE PLAQUES COURBÉES

(30) Priority: 30.10.2020 KR 20200143553; 30.10.2020 KR 20200143731; 30.04.2021 KR 20210056444; 30.04.2021 KR 20210056445
(43) Date of publication of application: 04.05.2022
(60) Divisional application: 25151656.3
(73) Proprietor: Korea Shipbuilding & Offshore Engineering Co., Ltd., Jongno-gu Seoul 03058 (KR); Hyundai Heavy Industries Co., Ltd., Ulsan 682-792 (KR)
(72) Inventor: JIN, Hyung Kook, Seoul (KR); LEE, Dong Gi, Seoul (KR); KANG, Sung Pil, Seoul (KR); KIM, Hyung Woo, Seoul (KR); SHIN, Sang Beom, Seoul (KR); KIM, Jong Jun, Seoul (KR); LEE, Dong Ju, Seoul (KR)
(74) Representative: J A Kemp LLP

(56) References cited:
- CN-A- 106 272 447
- CN-A- 110 743 976
- CN-U- 204 135 136
- JP-A- S60 231 524
- KR-A- 20100 037 483
- US-A1- 2002 100 308

## Description

### [Technical Field]

The present disclosure relates an apparatus for forming a 3-dimensional (3D) curved plate by heating a flat plate, and more particularly, to an automatic curved plate forming apparatus which performs a task by precisely taking the operating range and pose of a forming robot, maintaining the gap between a heating device and a curved plate precisely and uniformly, and accurately measuring the shape of the curved plate, thereby achieving multicomponent continuous heating and unmanned automation.

### [Background Art]

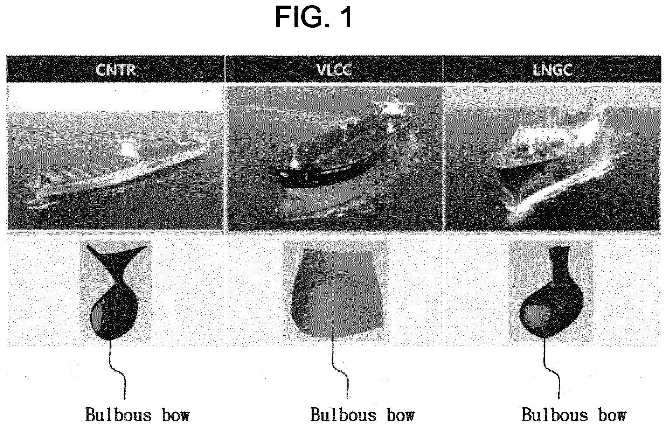

A ship's hull is made up of 3-dimensional (3D) curved plates welded together. In particular, as shown in FIG. 1, a bulb plate at the bow of the ship is formed through a complex forming operation due to sharp bends.

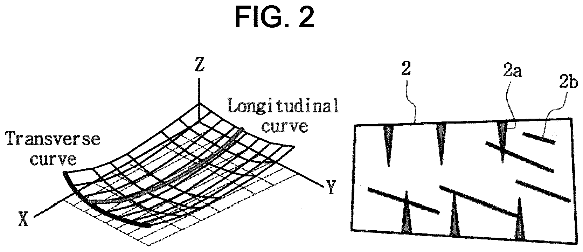

In general, as shown in FIG. 2, curved hull plate forming (curve forming) involves forming a transverse curve in a flat plate at room temperature through a cold forming process, and forming transverse and longitudinal curves in combination through a hot curve forming process by local heat bending the plate having the transverse curve after putting the plate into a curved plate forming apparatus.

In the hot curve forming process, to form the complex curve, it is necessary to perform a complicated and precise heating process such as, for example, line heating 2a and triangle heating 2b locally at an intended location, and this heating process is performed using an automation machine as described in Patent Literatures 1 and 2, rather than relying on an operator's manual heating task using a heat torch.

In the case of the existing automatic curved plate forming apparatus including Patent Literatures 1 and 2, it is difficult to take a pose to precisely place a heating device in conformity with a curved surface in response to the curve forming process due to the limited operating range of a robot, and also difficult to maintain the gap between the heating device and the plate uniformly and precisely.

Accordingly, a situation in which the robot is difficult to perfectly perform the entire programmed curve forming process occurs, so it is impossible to achieve full unmanned automation or multicomponent continuous forming in the real applications, or the precision of products reduces, requiring an additional manual operation.

Additionally, recently, with dramatic increase in the shipbuilding demand, various technologies capable of supporting curved hull plate forming are being developed/widespread.

For example, examples of the existing technologies related to curved hull plate forming are described in more detail in Korean Patent No. 10-1650590 (Title: Method for predicting unfolded shape of curved plate) (published on August 24, 2016), Korean Patent No. 10-1570296 (Title: Heating device for forming curved plate) (published on November 19, 2015), Korean Patent Publication No. 10-2008-105522 (Title: Curved hull plate forming system and method) (published on December 4, 2008), Korean Patent Publication No. 10-2008-100902 (Title: System and method for generating heat pattern and path of triangle heating) (published on November 21, 2008), Korean Patent Publication No. 10-2012-56567 (Title: System and method for determining heating shape and position of triangle heating) (published on June 4, 2012).

Meanwhile, under the existing system, a curved hull plate is fabricated by machining a steel plate of a predetermined thickness into a 3D curve designed based on the engineering technology, for example, hydromechanics, structural mechanics and oscillation, and the ship hull plate machining precision affects the overall design performance of the ship.

In this instance, forming a plate into a 3D shape uses a largely two-stage method, and the two-stage method is divided into mechanical primary cold forming through a press or a roller and secondary hot forming by applying heat to a steel plate using a gas torch.

The cold forming is a method which forms a curve using a roll press, a multi press or a bending press, and currently, it is commonly used by most of shipyards to form a developable shape. The developable shape refers to a shape that can be formed by simple bending deformation of a cut flat plate without in-plane contraction or expansion.

The hot forming is a process which forms an iron plate (a steel plate) into a 3D curved shape by applying heat to the steel plate using a heat source of a gas torch and a high frequency induction heating device to cause contraction, expansion and bending deformation.

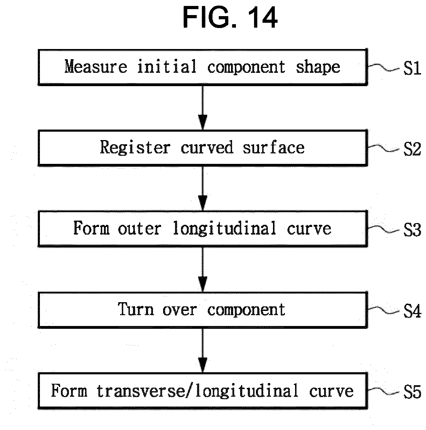

Meanwhile, as shown in FIG. 14, the existing curved hull plate forming operation includes 'a procedure of measuring an initial shape of a component (S1)', 'a procedure of registering a curved surface (S2)', 'a procedure of forming an outer longitudinal curve (a 3D shape of combined convex and concave shapes in the longitudinal direction of the component) using backside heat lines (S3)', 'a procedure of turning over the component (S4)' and 'a procedure of forming a transverse/longitudinal curve using line heating heat lines/triangle heating heat lines (S5)'.

In this instance, to perform the 'procedure of forming an outer longitudinal curve (a 3D shape of combined convex and concave shapes in the longitudinal direction of the component) using backside heat lines (S3)', an operator places a template having an intended shape for a target component, checks its deviation with an eye, marks backside heat lines on the component relying entirely on personal experience or determination, and performs a heating task.

However, the existing method relies entirely on simply the operator's skill and know-how, so it is difficult to define a tendency, causing a serious problem that it is impossible to standardize technology.

Additionally, the existing method requires a large amount of time in handing over skills to new operators as skilled operators get older, causing a serious problem with significant reduction in the overall productivity.

In particular, under the existing system, after the procedure S3 is performed, the procedure of turning over the component (S4) and the procedure of forming a transverse/longitudinal curve (S5) are performed, and in this instance, when it is determined that the outer longitudinal curve is not formed as desired, there is no choice but to repeat 'the procedure of turning over the component to heat the backside (i.e., the procedure of forming an outer longitudinal curve of S3)', and unavoidably, the shipbuilders have to put up with severe productivity losses.

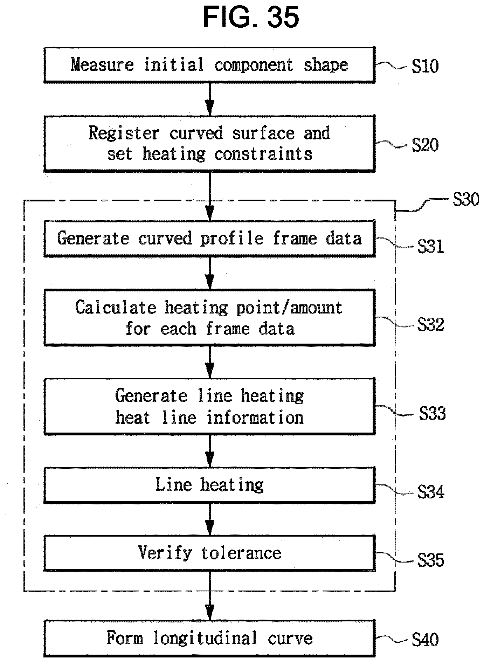

Meanwhile, as shown in FIG. 35, the existing curved hull plate forming operation includes 'a procedure of measuring an initial shape of a component (S10)', 'a procedure of registering a curved surface and setting critical heating conditions (S20)', 'a procedure of forming a transverse curve by line heating (S30)' and 'a procedure of forming a longitudinal curve by triangle heating (S40)'.

In this case, 'the procedure of forming a transverse curve by line heating (S30)' includes 'a procedure of generating curved profile frame data (S31)', 'a procedure of calculating/generating a heating point/heat line for each frame data (S32)', 'a procedure of generating line heating heat line information (S33)', 'a procedure of performing line heating according to the line heating heat line information (S34)' and 'a procedure for verifying a tolerance (S35)'.

Under the existing system, the 'procedure of generating line heating heat line information (S33)' is performed based on geometric analysis of the curved surface and the thermal deformation prediction technique of metals.

However, since the existing 'method for deriving line heating heat line information through thermal deformation prediction of metals' essentially includes so-called "appropriate assumption', there is a series of errors between the predicted forming amount and the actual thermal forming outcome to some extent, and as a result, unavoidably, shipbuilders have to perform '2~3 additional measurement and additional heating procedures' including the 'procedure for verifying a tolerance (S35)' after 'one measurement and one automatic heating'.

Of course, as described above, when 'the 2~3 additional measurement and additional heating procedures' is unavoidably additionally performed after 'one measurement and one automatic heating', the shipbuilders inevitably have to put up with severe damage such as significant reduction in the overall ship production efficiency.

CN 110 743 976 A, which forms the basis for the preamble of claim 1, discloses hull outer plate curved surface forming equipment based on double mechanical arms and an implementation method thereof. A main body of an equipment hardware system adopts a frame structure of a portal frame, two floating six-shaft industrial mechanical arms are mounted on a cross beam of the portal frame, and a flame gun heating device, a water spray cooling device and a distance measuring sensor are mounted at the tail end of each mechanical arm; a camera acquires ship plate shape data; and a touch control console manipulates the entire equipment. The equipment software system integrates an intelligent forming decision support subsystem for the hull outer plate curved surface, a motion control subsystem and the like, the former is used to generate a heating track and machining parameters, and the latter is used to control the coordinated motion of the double mechanical arms.

US 2002/100308 A1 discloses a processing apparatus which includes a stretch-forming apparatus and a beam processing unit or apparatus, which can be controlled by a common control unit. The beam processing unit can be a laser beam processing unit, which permits a sheet metal piece to be subjected to an additional laser processing step before, during and/or after a stretch-forming process.

### [RELATED LITERATURES]

### [Patent Literatures]

(Patent Literature 1) Korean Patent Publication No. 10-2011-0025361 (2011.03.10.)
(Patent Literature 2) Korean Patent Publication No. 10-2015-0023094 (2015.03.05.)
(Patent Literature 3) Korean Patent Publication No. 10-2013-0084786 (2013.07.26.)
(Patent Literature 4) Korean Patent Publication No. 10-2013-0085248 (2013.07.29.)
(Patent Literature 5) Korean Patent No. 10-1650590 (Title: Method for predicting unfolded shape of curved plate) (published on August 24, 2016)
(Patent Literature 6) Korean Patent No. 10-1570296 (Title: Heating device for forming curved plate) (published on November 19, 2015)
(Patent Literature 7) Korean Patent Publication No. 10-2008-105522 (Title: Curved hull plate forming system and method) (published on December 4, 2008)
(Patent Literature 8) Korean Patent Publication No. 10-2008-100902 (Title: System and method for generating heat pattern and path of triangle heating) (published on November 21, 2008)
(Patent Literature 9) Korean Patent Publication No. 10-2012-56567 (Title: System and method for determining heating shape and position of triangle heating) (published on June 4, 2012)
(Patent Literature 10) Korean Patent No. 10-1650590 (Title: Method for predicting unfolded shape of curved plate) (published on August 24, 2016)
(Patent Literature 11) Korean Patent No. 10-1570296 (Title: Heating device for forming curved plate) (published on November 19, 2015)
(Patent Literature 12) Korean Patent Publication No. 10-2008-105522 (Title: Curved hull plate forming system and method) (published on December 4, 2008)
(Patent Literature 13) Korean Patent Publication No. 10-2008-100902 (Title: System and method for generating heat pattern and path of triangle heating) (published on November 21, 2008)
(Patent Literature 14) Korean Patent Publication No. 10-2012-56567 (Title: System and method for determining heating shape and position of triangle heating) (published on June 4, 2012)

### [Disclosure]

### [Technical Problem]

The present disclosure is designed to solve the above-described problems, and the first object of the present disclosure is to provide an automatic curved plate forming apparatus which performs a task by precisely taking the operating range and pose of a forming robot, maintaining the gap between a heating device and a curved plate precisely and uniformly, and accurately measuring the shape of the curved plate, thereby achieving multicomponent continuous heating and unmanned automation.

These and other objects of the present disclosure will be apparent from the following detailed description and the accompanying drawings.

### [Technical Solution]

To achieve the first object of the present disclosure, the present disclosure discloses an automatic curved plate forming apparatus of the invention, as defined in appended claim 1.

In the automatic curved plate forming apparatus according to the present disclosure, the robotic arm preferably includes: the first arm; a second arm connected to a side of the first arm rotatably around a second axis that extends in a direction intersecting the first axis; a third arm connected to a rotating end of the second arm rotatably around a third axis that extends in a direction parallel to the second axis; a fourth rotation axis extending down from a side of the third arm and installed rotatably around a fourth axis that extends in a direction intersecting the third axis; a fifth arm connected to a front end of the fourth rotation axis rotatably around a fifth axis that extends in a direction intersecting the fourth axis; and a sixth rotation axis connected to an end of the fifth arm rotatably around a sixth axis that extends in a direction intersecting the fifth axis, and having an end connected to the mount to operate the mount.

In the automatic curved plate forming apparatus according to the present disclosure, the mount preferably includes a bottom plate, and a rear inclined plate inclined upward at an angle θ in an outer upward direction from a rear surface of the bottom plate, and an end surface of the sixth rotation axis is connected to the rear inclined plate, facing the rear inclined plate.

In the automatic curved plate forming apparatus according to the present disclosure, the inclination angle θ of the rear inclined plate to the bottom plate is preferably 40° to 50°.

In the automatic curved plate forming apparatus according to the present disclosure, preferably, the first arm includes an extended block that extends from a radial outer side of the first arm to use the second axis intersecting the first axis as a shaft center, and a base end portion of the second arm is connected to the extended block rotatably around the second axis.

In the automatic curved plate forming apparatus according to the present disclosure, the fourth axis which is a center of rotation of the fourth rotation axis is preferably formed at a location outside of the rotating end of the second arm.

In the automatic curved plate forming apparatus according to the present disclosure, a gap measuring sensor for measuring a gap between the heating head and the curved plate is preferably installed on a lower surface of the bottom plate of the mount, each one installed at nearby three locations adjacent to a perimeter of the heating head and additional one installed at one or more locations between the three locations.

In the automatic curved plate forming apparatus according to the present disclosure, a plurality of shape measuring sensors for measuring a shape of a part of the curved plate is preferably installed on a lower surface of one side of the carriage.

In the automatic curved plate forming apparatus according to the present disclosure, the shape measuring sensors are preferably installed at five or more locations in a transverse direction of the curved plate and in two or more lines in a longitudinal direction.

In the automatic curved plate forming apparatus according to the present disclosure, a heating head deformation measuring sensor for measuring deformation of the heating head is preferably installed in the carrier.

In the automatic curved plate forming apparatus according to the present disclosure, a heating head deformation measuring sensor for measuring deformation and position of the heating head is preferably installed in the carrier.

### [Advantageous Effects]

According to the automatic curved plate forming apparatus according to the present disclosure, by a combination of the structure of the 6-axis robotic arm, the structure of the first arm of the 6-axis robotic arm installed in a vertical direction from the side of the guide beam, the structure of the fifth arm and the sixth rotation axis, which are the working terminal of the 6-axis robotic arm, installed at the predetermined angle θ to the mount, the structure of connecting two three rotation axes (the first arm, the fourth rotation axis, the sixth rotation axis), the gap measuring sensor, the shape measuring sensor and the collision detection sensor, it is possible to make use of the maximum operating range of the mount and the heating head, finely adjust the pose of the mount and the heating head, and precisely measure the shape of the curved plate, thereby realizing the automatic curved plate forming apparatus capable of unmanned automation.

### [Description of Drawings]

FIG. 1 is a diagram showing an example of a common curved hull plate.
FIG. 2 is a diagram for describing a common curved plate forming process.
FIG. 3 is a diagram showing an automatic forming system for curved plates according to the present disclosure.
FIG. 4 is a perspective view showing a curved plate forming apparatus according to the present disclosure.
FIG. 5 is a perspective view of the forming apparatus of FIG. 4 when viewed from a different direction.
FIG. 6 is a side view of a curve forming robot according to the present disclosure.
FIG. 7 is a perspective view of the robot of FIG. 6.
FIG. 8 is a perspective view of FIG. 7 when viewed from a different direction.
FIG. 9 is a perspective view of the main part of a curve forming robot according to the present disclosure.
FIG. 10 is a side view of the main part of a curve forming robot according to the present disclosure.
FIG. 11 is a perspective view of a heating device of a curve forming robot according to the present disclosure when viewed from the bottom.
FIG. 12 is a plan view showing the arrangement of gap measuring sensors of a heating device of a curve forming robot according to the present disclosure.
FIG. 13 is a diagram showing the arrangement of sensors for curved plate shape measurement of a curve forming robot according to the present disclosure.
FIG. 14 is an exemplary diagram conceptually showing a common curved hull plate forming procedure.
FIG. 15 is an exemplary diagram conceptually showing a communication connection pattern of an outer longitudinal curve forming system for curved hull plates not according to the present disclosure.
FIG. 16 is an exemplary diagram conceptually showing the detailed architecture of an outer longitudinal curve forming system for curved hull plates not according to the present disclosure.
FIGS. 17 to 34 are exemplary diagrams conceptually showing the detailed function performing procedure of an outer longitudinal curve forming system for curved hull plates not according to the present disclosure.
FIG. 35 is an exemplary diagram conceptually showing a common curved hull plate forming procedure.
FIG. 36 is an exemplary diagram conceptually showing a communication connection pattern of a transverse curve forming system for curved hull plates not according to the present disclosure.
FIG. 37 is an exemplary diagram conceptually showing the detailed architecture of a transverse curve forming system for curved hull plates not according to the present disclosure.
FIG. 38 is an exemplary diagram conceptually showing a detailed configuration of an additional line heating heat line information generation module not according to the present disclosure.
FIGS. 39 to 64 are exemplary diagrams conceptually showing the detailed function performing procedure of a transverse curve forming system for curved hull plates not according to the present disclosure.

### [Best Mode]

Hereinafter, embodiments of an automatic forming system for curved plates according to the present disclosure will be described in detail with reference to the accompanying drawings.

### (Embodiment 1) An automatic forming system for curved plates

It corresponds to claims 1 to 9.

### <An automatic forming system for curved plates>

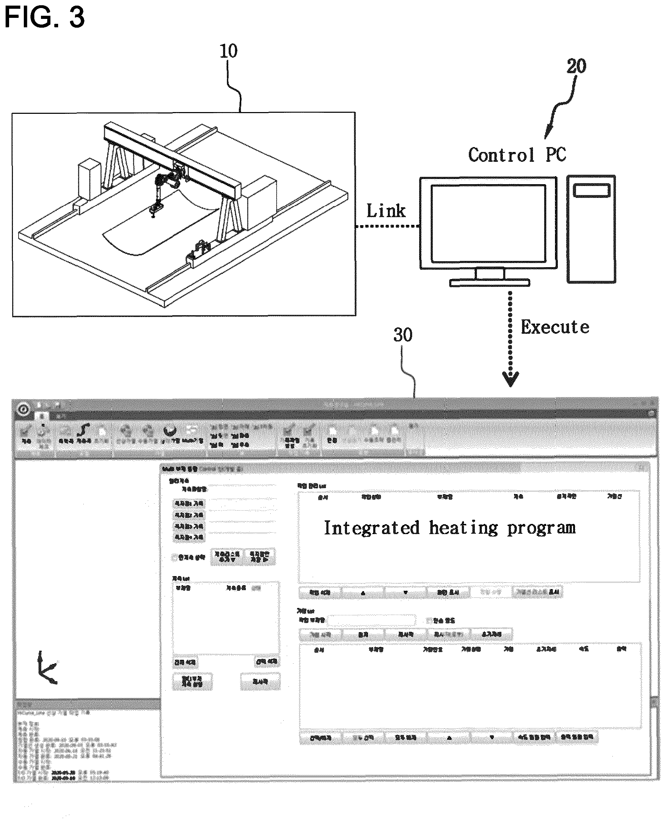

FIG. 3 is a diagram showing an automatic forming system for curved plates according to the present disclosure.

Referring to FIG. 3, the automatic forming system for curved plates of the present disclosure includes an automatic curved plate forming apparatus 10 to form a curve using a robotic arm and a high frequency induction heating device, and a control device 20 equipped with a curve forming program and a computation device to control the entire automatic curved plate forming apparatus 10 and including an input device for a manager to input and an output device such as a monitor 30, and forms a curved plate by automatically controlling the pose of the robotic arm and the high frequency induction heating device and the heating intensity and rate by the program.

### <Automatic curved plate forming apparatus>

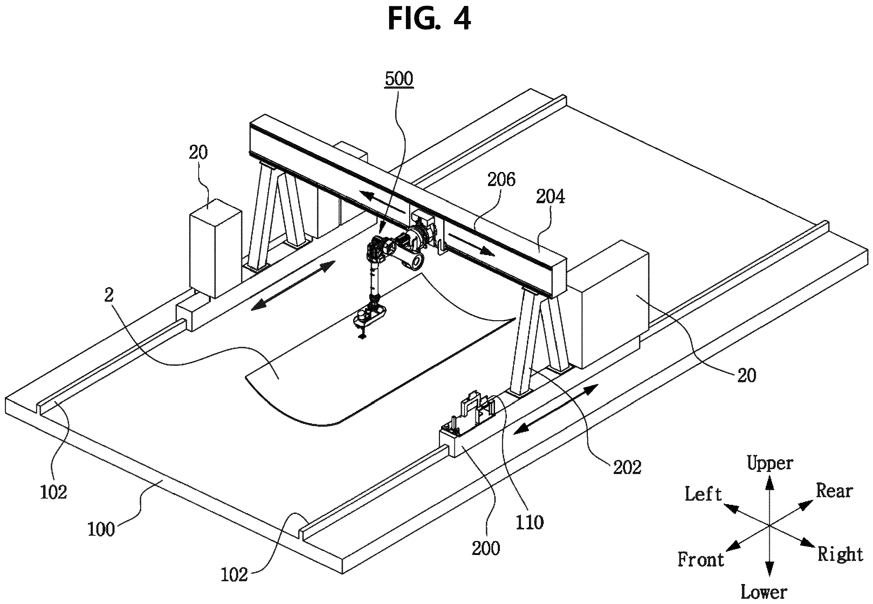

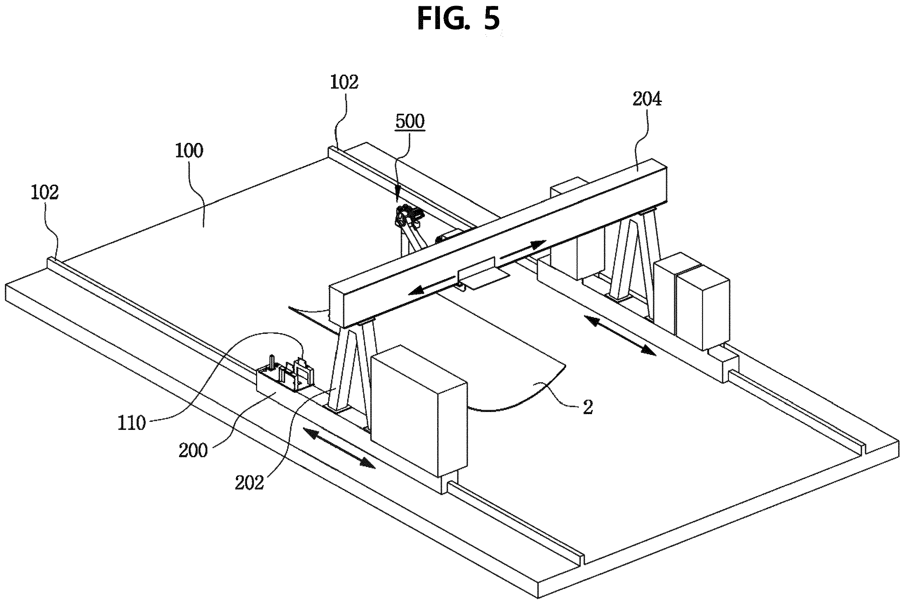

FIGS. 4 and 5 show the curved plate forming apparatus 10 according to the present disclosure, and FIG. 4 is a perspective view and FIG. 5 is a perspective view of the forming apparatus of FIG. 4 when viewed from a different direction.

Referring to FIGS. 4 and 5, the automatic curved plate forming apparatus 10 according to the present disclosure includes a bed 100 on which a curved plate 2 is loaded, a rail 102 installed in the longitudinal direction on the left and right sides of the bed 100, and a carrier 200 movably mounted on each of the two rails 102.

A column 202 extends upward from each of the two carriers 200, and a guide beam 204 is installed across the two columns 202 (in the left-right direction in the drawing).

A carriage 510 is movably installed in the guide beam 204 in the left-right direction (in the transverse direction) along a guide rail 206 of the guide beam 204.

Additionally, a rotation axis base 520 is mounted on the side of the carriage 510, and a 6-axis robotic arm 500 is mounted on the rotation axis base 520.

The 6-axis robotic arm 500, in particular, its first arm 530 is connected rotatably around a first axis X1 that is perpendicular to the side of the carriage 510 and extends in a direction parallel to the ground.

As described above, as the first arm 530 of the 6-axis robotic arm 500 is installed by a sidewall installation method, i.e., in a vertical direction from the side of the guide beam 204, it is possible to make use of the maximum operating range of the 6-axis robotic arm 500.

The working terminal of the 6-axis robotic arm 500 is connected to a mount 580 for mounting high frequency induction heating equipment and a heating head 590.

The mount 580 is connected to the working terminal of the 6-axis robotic arm 500 rotatably and pivotably in the vertical direction (for details, a reference is made to the following description of the 6-axis robotic arm 500).

The heating head 590 for high frequency induction heating of the curved plate 2 is installed in the mount 580. The heating head 590 is installed at a location that is spaced a predetermined distance down apart from the mount 580. To this end, a support 592 extends down from the mount 580, and the heating head 590 is installed at the front end of the support 592. The heating head 590 has a heating region having a high frequency induction coil as with Patent Literature 3, and the support 592 has a power supply line to supply the electric current to the high frequency induction coil.

The heating head 590 heats in a pose facing the curved plate 2 in parallel to the surface of the curved plate 2 with a uniform gap through the motion control of the 6-axis robotic arm 500.

### <6-axis robotic arm>

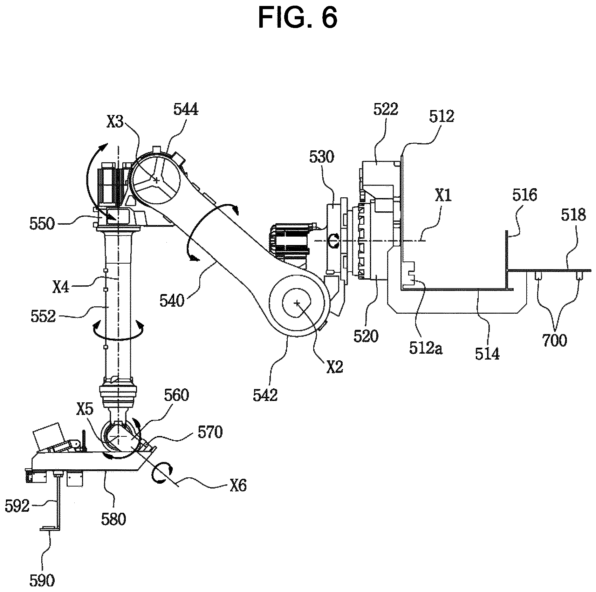

Subsequently, the structure of the 6-axis robotic arm 500 according to the present disclosure will be described in detail through FIGS. 6 to 10.

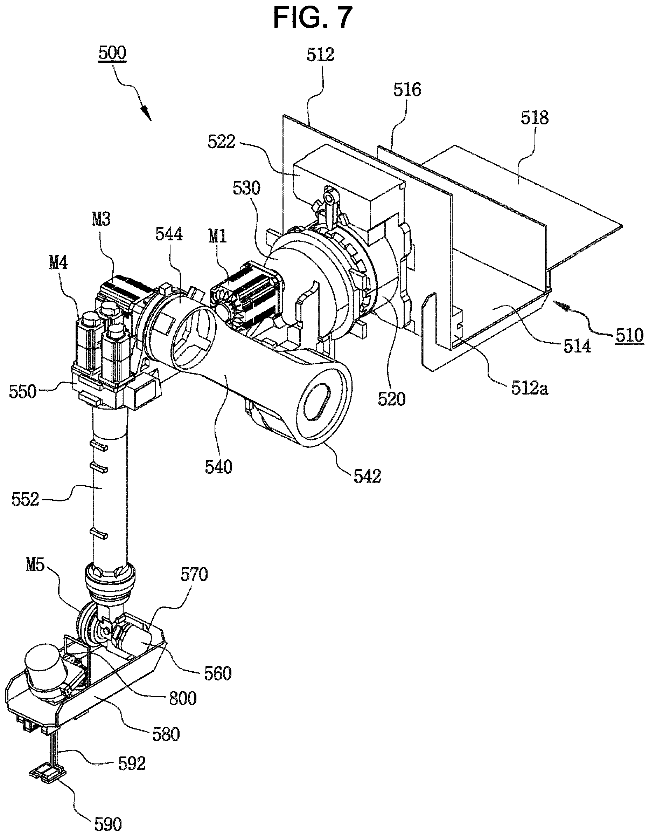

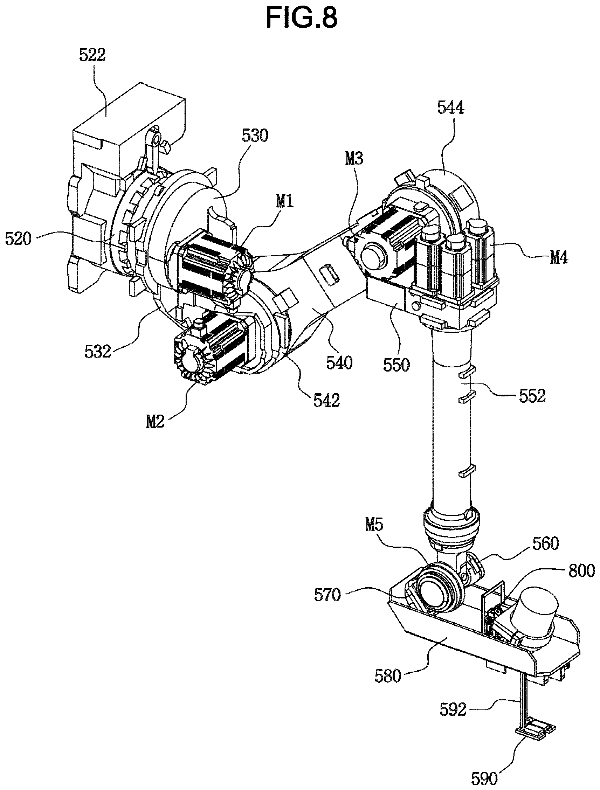

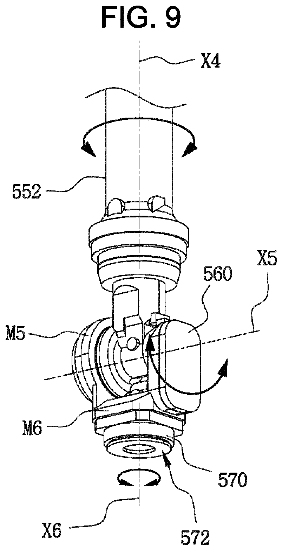

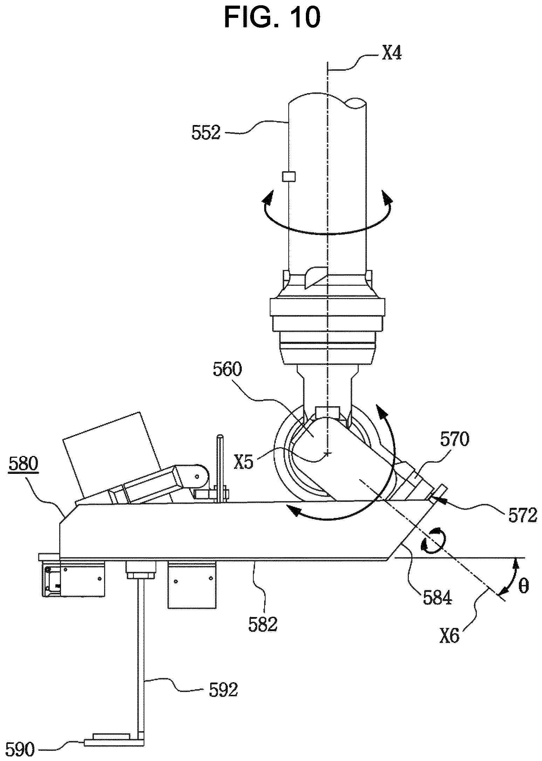

FIG. 6 is a perspective view, FIG. 7 is a perspective view of the robot of FIG. 6 when viewed from a different direction, FIG. 8 is a side view, FIG. 9 is a perspective view of the main part (the working terminal), and FIG. 10 is a side view of the main part (the working terminal).

To begin with, referring to FIGS. 6 to 8, the above-described carriage 510 is movable along the guide beam 204 with its guide block 512a slidably connected to the guide rail 206 of the guide beam 204.

Specifically, the carriage 510 includes a front plate 512 that faces the front side of the guide beam 204, a bottom plate 514 that extends from the front plate 512 across the lower surface of the guide beam 204, and a rear plate 516 that extends up from the bottom plate 514 and faces the rear side of the guide beam 204. An extended plate 518 extends horizontally from the rear plate 516. A shape measuring sensor 700 as described below is installed in the extended plate 518.

The above-described rotation axis base 520 is mounted on the side of the carriage 510, i.e., the front plate 512, and the first arm 530 of the 6-axis robotic arm 500 is connected to the rotation axis base 520.

The first arm 530 is connected rotatably around the first axis X1 that is perpendicular to the side of the carriage 510 and extends in a direction parallel to the ground.

As described above, as the first arm 530 of the 6-axis robotic arm 500 is installed by a sidewall installation method, i.e., in a vertical direction from the side of the guide beam 204, it is possible to make use of the maximum operating range of the 6-axis robotic arm 500.

The first arm 530 is connected to the rotation axis base 520. The first arm 530 is connected rotatably around the first axis X1 that is perpendicular to the side of the carriage 510 and extends in a direction parallel to the ground.

A second arm 540 is connected to the side of the first arm 530. The second arm 540 has a base end portion 542 connected rotatably around a second axis X2 that extends in a direction intersecting the first axis X1. Accordingly, the second arm 540 may make a combination of a motion of rotating around the first axis X1 by rotation of the first arm 530 as a whole, and at the same time, a motion of self-rotating around the second axis X2.

The first arm 530 may have an extended block 532. The extended block 532 extends in a direction parallel to the first axis X1 from a radial outer side of the first arm 530 to use the second axis X2 intersecting the first axis X1 as its shaft center.

The base end portion 542 of the second arm 540 is connected to the extended block 532 rotatably around the second axis X2.

A third arm 550 is connected to a rotating end 544 of the second arm 540. The third arm 550 is connected rotatably around a third axis X3 that extends in a direction parallel to the second axis X2.

A fourth rotation axis 552 is rotatably installed in the third arm 550. The fourth rotation axis 552 is installed such that it extends down from one side of the third arm 550, and is installed rotatably around a fourth axis X4 that extends in a direction intersecting the third axis X3. When the third arm 550 keeps the horizon, the third arm 550 assumes a shape that extends down in a direction perpendicular to the third arm 550.

In this embodiment, the fourth axis X4 which is the center of rotation of the fourth rotation axis 552 is formed at a location outside of the rotating end 544 of the second arm 540. This is achieved by the third arm 550 having an extended length in the radial direction from the third axis X3 enough to go beyond the rotating end 544 of the second arm 540 around the third axis X3.

A fifth arm 560 is connected to the front end of the fourth rotation axis 552. The fifth arm 560 is connected rotatably around a fifth axis X5 that extends in a direction intersecting the fourth axis X4.

A sixth rotation axis 570 is rotatably connected to a rotating end of the fifth arm 560. The fifth arm 560 is connected rotatably around a sixth axis X6 that extends in a direction intersecting the fifth axis X5.

The above-described mount 580 is connected to the end of the sixth rotation axis 570. Accordingly, the mount 580 makes a combination of a motion of vertically rotating around the fifth axis X5 by the fifth arm 560 and a motion of rotating around the sixth axis X6 by the sixth rotation axis 570.

Subsequently, FIGS. 9 and 10 illustrate a connection relationship between the working terminal of the 6-axis robotic arm 500 and the mount 580, FIG. 9 is a perspective view, and FIG. 10 is a side view.

Referring to FIGS. 9 and 10, in this embodiment, the mount 580 includes a bottom plate 582 and a rear inclined plate 584 inclined upward at an angle θ in the outer upward direction from the rear surface of the bottom plate 582. The inclination angle θ of the rear inclined plate 584 to the bottom plate 582 is preferably 40° to 50°.

The rear inclined plate 584 is configured to connect the sixth rotation axis 570 which is the working terminal of the 6-axis robotic arm 500.

That is, an end surface 572 of the sixth rotation axis 570 is connected to the rear inclined plate 584, facing the rear inclined plate 584.

As the mount 580 has the rear inclined plate 584 inclined at the angle θ and the end surface 572 of the sixth rotation axis 570 is connected to the rear inclined plate 584, facing the rear inclined plate 584, an angle between the sixth axis X6 (the same direction as an extension axis of the fifth arm 560) which is the center of axis of the sixth rotation axis 570 and the bottom plate 582 may be inclined as much as the angle θ between the bottom plate 582 and the rear inclined plate 584.

As described above, as the fifth arm 560 and the sixth rotation axis 570 which are the working terminal of the 6-axis robotic arm 500 are installed at the predetermined angle θ (for example, 45°) to the mount 580, it is possible to make use of the maximum operating range of the mount 580 and the heating head 590 and precisely adjust the pose of the mount 580 and the heating head 590.

For example, since the existing automatic curved plate forming apparatus including Patent Literatures 1 and 2 has the rotation axis base 520 and the first arm 530 vertically installed and rotating around the vertical axis to rotate the entire robotic arm and the working terminal of the robotic arm and the mount 580 installed in the same direction, it is difficult to take a pose in conformity with the complex shape of the curved plate 2 due to the limited operating range and pose of the robotic arm and the mount 580.

However, as described above, the 6-axis robotic arm 500 of the present disclosure has a structure that the first arm 530 is installed in a vertical direction from the side of the guide beam 204, thereby rotating the entire 6-axis robotic arm 500 around the horizontal first axis X1. Additionally, by the structure in which the fifth arm 560 and the sixth rotation axis 570 which are the working terminal of the 6-axis robotic arm 500 are installed at the predetermined angle θ to the mount 580, it is possible to expand the operating range of the mount 580 and the heating head 590 and take a precise pose. Additionally, by the structure of one first arm 530 rotating in the horizontal direction, the second arm 540 connected to the first arm 530 rotatably in the vertical direction, the fourth rotation axis 552 in the vertical direction mounted on the second arm 540, and the fifth arm 560 at the front end of the fourth rotation axis 552 and connected to the mount 580 at an angle through the sixth rotation axis 570, it is possible to expand the operating range of the mount 580 and the heating head 590 and take a precise pose. Additionally, these advantages are maximized by combining the above structures.

### <Sensor for gap maintenance>

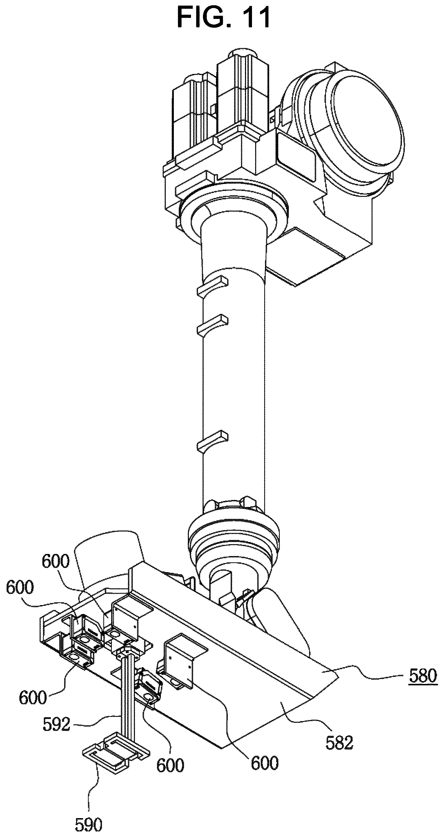

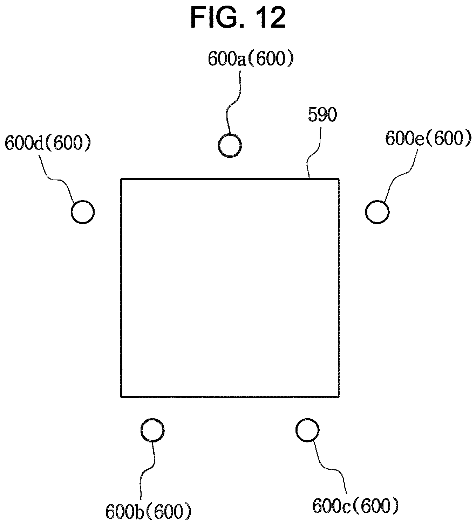

FIGS. 11 and 12 illustrate the arrangement of gap measuring sensors 600 according to the present disclosure, FIG. 11 is a perspective view of the mount 580 which is a heating device when viewed from the bottom, and FIG. 12 is a plan view showing an arrangement relationship of the gap measuring sensors 600.

Referring to FIGS. 11 and 12, the gap measuring sensor 600 of the present disclosure measures the gap between the heating head 590 and the curved plate 2 and transmits to the control device 20, to enable the control device 20 to control the pose of the heating head 590 to maintain the uniform gap, facing the curved plate 2.

As shown in FIG. 11, the plurality of gap measuring sensors 600 is installed on the lower surface of the bottom plate 582 of the mount 580. The gap measuring sensor 600 includes a laser displacement sensor, and calculates the gap between the heating head 590 and the curved plate 2 by measuring the distance from the curved plate 2.

The gap measuring sensors 600 have an arrangement structure shown in FIG. 12.

Although four or more gap measuring sensors 600 are installed in this embodiment, each one gap measuring sensor may be installed at nearby three locations adjacent to the perimeter of the heating head 590, and one additional gap measuring sensor may be installed at one or more locations between the three locations.

To calculate a relative position between the heating head 590 and the curved plate 2, it is necessary to measure three locations on the curved plate 2, but since it is not guaranteed that the gap measuring sensors 600 always make accurate measurements, in addition to the three sensors, one more sensor is installed in at least one location, and the position of the curved plate 2 is predicted by combining three of the measurement points except a sensor value predicted to be inaccurate measurement, and the position and pose of the coil is calculated to keep the heating head 590 parallel to the position with a uniform gap.

As with the embodiment shown in FIGS. 11 and 12, it is preferred to basically have three gap measuring sensors 600: 600a, 600b, 600c, and install an additional gap measuring sensor 600d between the gap measuring sensor 600a and the sensor 600b and an additional gap measuring sensor 600e between the gap measuring sensor 600a and the sensor 600c.

### <Shape measuring sensor 700>

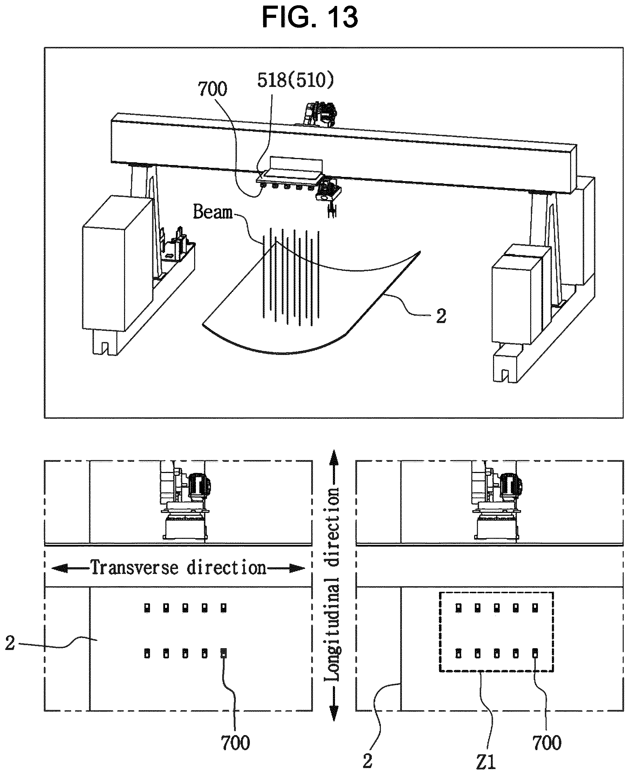

FIG. 13 is a diagram showing the arrangement of sensors for curved plate shape measurement of the curve forming robot according to the present disclosure.

Referring to FIG. 13, the shape measuring sensor 700 includes a laser displacement sensor, and is installed in the carriage 510.

In this embodiment, the extended plate 518 is integrally formed in the carriage 510, and the plurality of shape measuring sensors 700 is installed in the extended plate 518.

The plurality of shape measuring sensors 700 measures the shape over the entire area of the curved plate 2 while moving with the front-rear movement of the guide beam 204 and the left-right movement of the carriage 510.

As can be seen from the figure shown in the lower part of FIG. 13, the plurality of shape measuring sensors 700 is placed in arrangement for measuring the shape of a measurement zone Z1 of a predetermined area (for example, a square or rectangular zone). Accordingly, the shape of all or part of the curved plate 2 may be measured by measuring the measurement zones Z1 in a sequential order with the movement of the carriage 510 and the carrier 200 along the curved plate 2, and transmitted to the control device 20.

As with this embodiment, the arrangement of the plurality of shape measuring sensors 700 may include at least ten shape measuring sensors installed at five locations in the transverse direction of the curved plate 2 and in two lines in the longitudinal direction.

Since the curved plate 2 is placed on the bed 100 in the lengthwise direction of the bed 100, the curved plate 2 has a high curvature in the widthwise direction and a low curvature in the longitudinal direction (the lengthwise direction).

Accordingly, since it is efficient that the plurality of shape measuring sensors 700 measures at a small interval in the widthwise direction in which the curvature is high and a large interval in the longitudinal direction in which the curvature is low, it is preferred to arrange the ten shape measuring sensors 700 in a way of densely arranging five shape measuring sensors 700 in the widthwise direction and widely arranging in two lines in the lengthwise direction.

By the arrangement of the shape measuring sensors 700, the distance from each shape measuring sensor 700 to the curved plate 2 may be measured, and the control device 20 may calculate the shape of the curved plate 2 through the measured distance.

### <Heating head deformation measurement/collision measurement>

Meanwhile, according to FIGS. 4 and 5, a heating head deformation measuring sensor 110 is installed in the carrier 200 to measure the deformation of the heating head 590.

The heating head deformation measuring sensor 110 may include a laser displacement sensor or an imaging sensor.

The heating head deformation measuring sensor 110 measures the actual gap between the heating head 590 and the curved plate 2 by measuring the actual position of the heating head 590 that directly heats the curved plate 2, and transmits to the control device 20, to enable the control device 20 to correct the position of the heating head 590 or detect the deformation of the heating head 590.

As described above, it is possible to achieve precise and uniform gap maintenance and precise forming by measuring the position or deformation of the heating head 590 through the heating head deformation measuring sensor 110.

Additionally, as shown in FIGS. 7 and 8, a collision detection sensor 800 is installed in the mount 580.

The collision detection sensor 800 may include a load cell, a stress sensor and an acceleration sensor, and when an impact above a reference value is applied to the heating head 590, the signal may be transmitted to the control device 20 to stop the equipment or generate an alarm.

As described above, by a combination of the structure of the 6-axis robotic arm 500, the structure of the first arm 530 of the 6-axis robotic arm 500 installed in a vertical direction from the side of the guide beam 204, the structure of the fifth arm 560 and the sixth rotation axis 570, which are the working terminal of the 6-axis robotic arm 500, installed at the predetermined angle θ to the mount 580, the structure of connecting two three rotation axes (the first arm 530, the fourth rotation axis 552, the sixth rotation axis 570), and the gap measuring sensor 600, the shape measuring sensor 700 and the collision detection sensor 800, the present disclosure may make use of the maximum operating range of the mount 580 and the heating head 590, finely adjusting the pose of the mount 580 and the heating head 590, and precisely measuring the shape of the curved plate 2, thereby realizing the automatic curved plate forming apparatus capable of unmanned automation.

The outer longitudinal curve forming system for curved hull plates not according to the present disclosure will be described in more detail below.

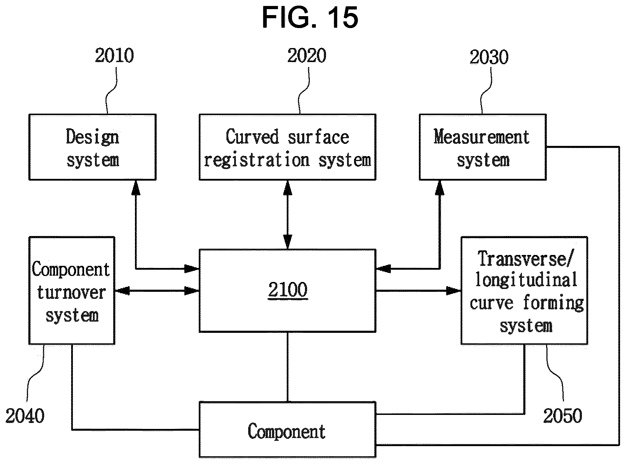

As shown in FIG. 15, the outer longitudinal curve forming system 2100 for curved hull plates not according to the present disclosure performs a procedure of forming an outer longitudinal curve in a component by communication with 'a design system 2010 for providing a component design shape (a curved surface design shape)', 'a curved surface registration system 2020 for performing a procedure of registering a curved surface design shape and a measured curved surface shape', 'a measurement system 2030 for providing a measured component shape (a measured curved surface shape)', 'a component turnover system 2040 for turning over the component' and 'a transverse/longitudinal curve forming system 2050 for forming a transverse/longitudinal curve in the component'.

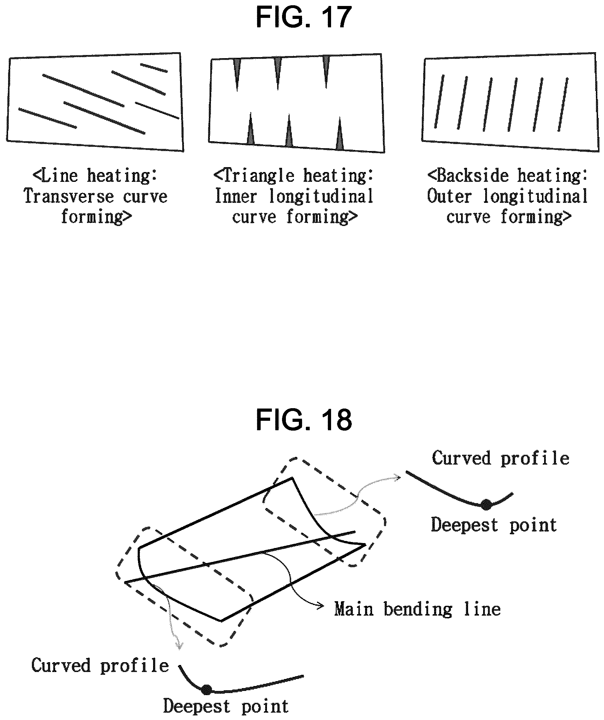

For reference, FIG. 17 shows the conceptual shape of the transverse/longitudinal curve formed by the transverse/longitudinal curve forming system 2050, and the conceptual shape of the outer longitudinal curve formed by the outer longitudinal curve forming system 2100 for curved hull plates not according to the present disclosure.

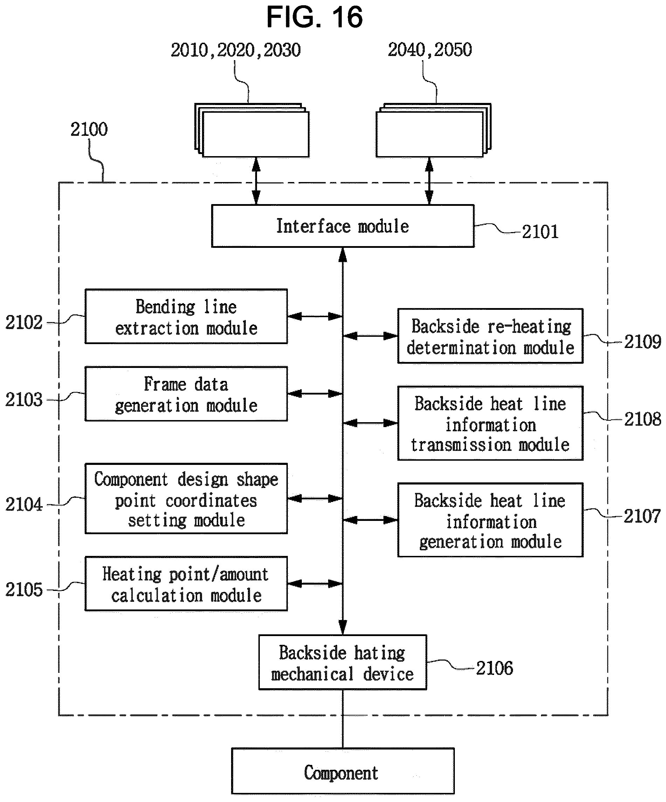

In this instance, as shown in FIG. 16, the outer longitudinal curve forming system 2100 for curved hull plates not according to the present disclosure takes a closely combined configuration of a bending line extraction module 2102, a frame data generation module 2103, a component design shape point coordinates setting module 2104, a heating point/amount calculation module 2105, a backside heating mechanical device 2106, a backside heat line information generation module 2107, a backside heat line information transmission module 2108 and a backside re-heating determination module 2109, in communication with 'the design system 2010 for providing a component design shape', 'the measurement system 2030 for providing a measured component shape', 'the component turnover system 2040 for turning over a component' and 'the transverse/longitudinal curve forming system 2050 for forming a transverse/longitudinal curve in the component' by the medium of an interface module 2101.

As shown in FIG. 18, the bending line extraction module 2102 performs a procedure of loading the component design shape by communication with the design system 2010, and generating a main bending line for the corresponding component design shape.

Under this procedure, the bending line extraction module 2102 imports the design shape of the component and generates the main bending line for the design shape of the component.

The main bending line extracts the lowest or highest location in two edge profiles of the component, connects with a straight line, and defines as the lowest location (deepest point) in cross section when the component is placed in a correct direction, and to the contrary, the highest location (highest point) in cross section when the component is turned over (see FIG. 18).

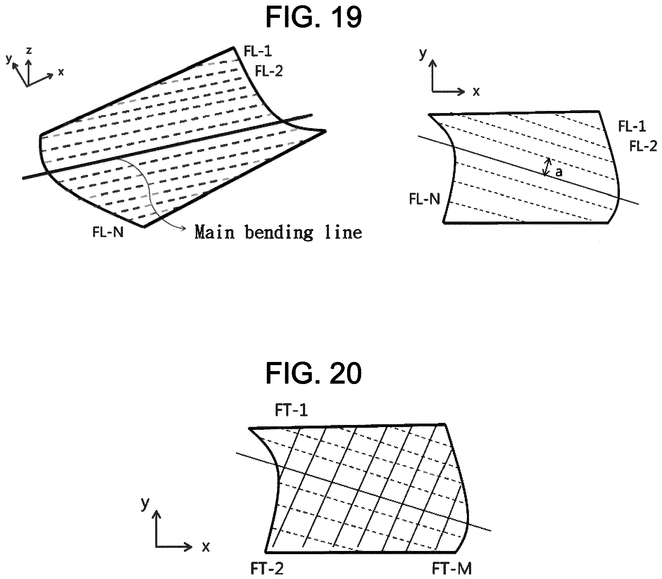

As shown in FIGS. 19 and 20, the frame data generation module 2103 performs a procedure of extracting the main bending line, generating N (N = 1, 2, 3 ...) frame lines parallel on the left and right sides with respect to the corresponding main bending line at an interval, storing the XYZ coordinates of points of each frame line as 'component design shape parallel frame data FL', generating M (M = 1, 2, 3 ...) frame lines perpendicular to the main bending line or having an angle at an interval, and storing the XYZ coordinates of points of each frame line as 'component design shape perpendicular frame data FT'.

Under this procedure, the frame data generation module 2103 extracts the main bending line, and generates N frame lines parallel on the left and right sides with respect to the main bending line at a uniform interval as shown in FIG. 19, and the frame lines are defined as FL. The interval a of the parallel frame lines may change depending on the outer longitudinal curve amount, and the point coordinates of each frame are stored in a frame data structure.

In addition to the FL data generated in FIG. 19, as shown in FIG. 20, M frame lines perpendicular to the main bending line or having an angle are generated at an interval, and they are defined as FT. The interval b of the frame lines which are perpendicular or have an angle may change depending on the outer longitudinal curve amount, and the point coordinates of each frame are stored in the frame data structure.

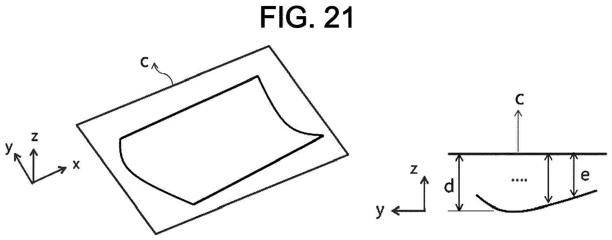

As shown in FIG. 21, the component design shape point coordinates setting module 2104 performs a procedure of generating an imaginary plane vertically spaced along the Z axis from the component design shape, and setting a vertical distance e between each point of the corresponding imaginary plane and each frame line of the FL as the coordinates (Pd, i) of each component design shape point Pd of the component design shape.

Under this procedure, the component design shape point coordinates setting module 2104 generates an arbitrary plane c vertically spaced in the z direction from the 3D computer-aided design (CAD) shape of the component imported from the design system 2010 (see FIG. 21).

In this instance, the arbitrary plane c is parallel to the xy plane of the reference coordinate system and spaced a specific distance d in the z direction apart from the origin. The vertical distance e from the frame line FL generated in FIG. 19 is extracted from the arbitrary plane c parallel to the coordinate system and stored in the structure. The stored z coordinate value e at each position is regarded as an outer longitudinal curve amount of the component.

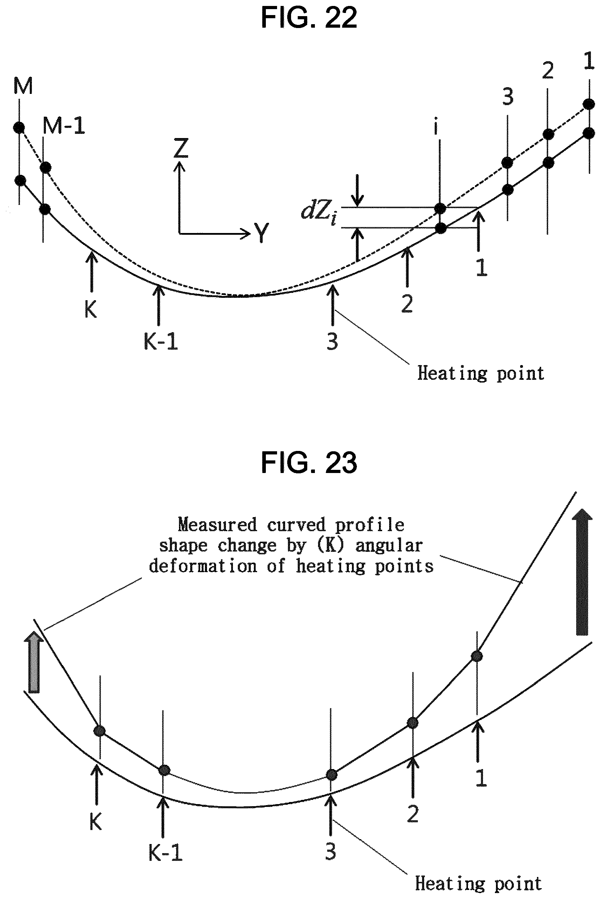

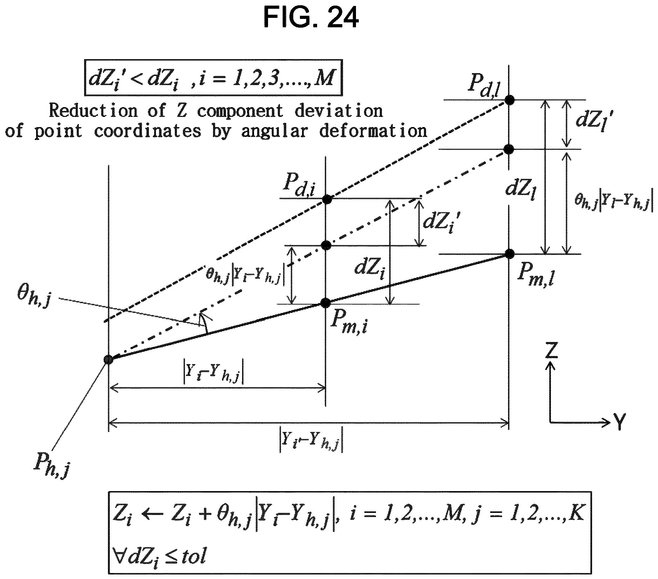

The heating point/amount calculation module 2105 performs a procedure of loading the measured component shape by communication with the measurement system 2030, and as shown in FIGS. 22 to 24, setting 'a situation in which there are K (K = 1, 2, 3 ...) virtual heating points in the measured component shape, and the coordinates (Pm, i) of the measured component shape points Pm become close to the coordinates (Pd, i) of the component design shape points Pd by rotational movement of each of the corresponding measured component shape points Pm of the measured component shape by angular deformation of the virtual heating points', calculating the coordinates (Ph, j) of optimal virtual heating points satisfying the allowable criterion tol for all dZi (i = 1, 2, 3 ..., M) as practicable heating point coordinates of the component design shape by repeatedly calculating Z-direction deviation dZi of the coordinates (Pm, i) and the coordinates (Pd, i) with varying numbers and positions of the virtual heating points, and calculating an angular deformation amount of the corresponding optimal virtual heating point as a practicable heating amount of the component design shape.

When there is a heating point in the component, angular deformation occurs by rotational deformation by bending the component with respect to the heating point.

When there is a plurality of heating points (K heating points) on the initial profile or the measured curved profile, the point coordinates (Pm, i) on the measured curved profile frame data make rotational movement close to the point coordinates (Pd, i) on the design curved profile frame data FL by angular deformation of each heating point (for example, the heating points exist on the FT). That is, each of M Z-direction (heightwise direction) deviations dZi of the point coordinates of the design curved profile frame data and the measured curved profile frame data becomes close to 0 by K angular deformations (see FIGS. 22 to 24).

In this instance, the heating point/amount calculation module 2105 repeatedly calculates the height deviation dZi for each case with varying numbers and positions of heating points, and for all dZi (i = 1, 2, ..., M), when the allowable criterion tol is satisfied, stores the heating point coordinates (Ph, j) of the corresponding case and the angular deformation amount at each heating point in the measured curved profile frame data structure. In this instance, the angular deformation amount is stored in the heating amount column.

The heating point/amount calculation module 2105 performs this process on all the design curved profiles and the measured curved profiles, and stores the heating point position coordinates and the angular deformation amount for each curved profile in each measured curved profile frame data structure.

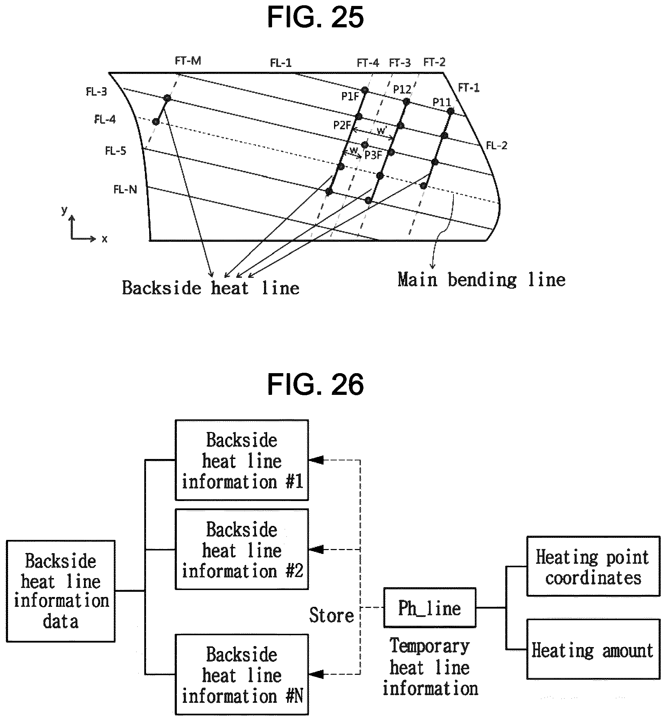

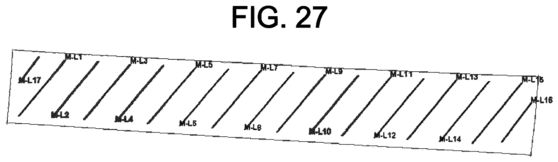

Meanwhile, as shown in FIGS. 25 to 27, the backside heat line information generation module 2107 performs a procedure of generating backside heat line information including the practicable heating point coordinates of the component design shape and the practicable heating amount of the component design shape.

Under this procedure, when the heating point and the heating amount are stored in all the curved profile frame data (FL, FT), the backside heat line information generation module 2107 generates backside heat line information.

The rule for generating the backside heat line information is as follows (see FIGS. 25 to 27).

First, heating points (a total of F heating points) of 1^{st} curved profile frame data FL-1 are stored as P11, P12, ..., P1F, respectively. In this instance, the heating points are stored in the descending order of X coordinates. P11 is stored in Ph_1 again.

Subsequently, frame data FT-1 that passes through Ph_1 and is perpendicular to the bending line or has an angle is used. The (X, Y, Z) coordinates and the heating amount of Ph_1 are added to an arbitrary {Ph_line}. {Ph_line} is a temporary array and stores the heating point coordinates and the heating amount of each heating point.

Subsequently, heating points on 2^{nd}~N^{th} curved profile frame data FL are detected to determine whether any corresponding heating point is within a distance w from the imaginary straight line in a sequential order from the 2^{nd} curved profile frame data FL-2, and if any, the coordinates and the heating amount of the corresponding heating point are added to the array {Ph_line}.

Subsequently, when the coordinates and the heating amounts of the heating points on the last N^{th} curved profile frame data FL are added to {Ph_line}, {Ph_line} is added to the heat line information data structure. The P12 is stored in Ph_1 again, {Ph_line} is initialized (array content is all deleted), and the coordinates and the heating amount of Ph_1 are added to {Ph_line}. Subsequently, the previous process is repeated. Likewise, P13~P1F undergo the previous process.

Subsequently, when there is a heating point spaced the distance w apart from the heating point P2F generated in the previous FL-2 among the heating points P3F generated in the curved profile frame data FL-3, in case that the distance is less than a specific distance value w', the heating point is regarded as a heating point connected to the heating point P2F generated in the previous FL, and connected with a heat line and added to (heat line on FT-4) information data structure.

The above-described steps are repeated. Here, frame data (FL & FT) heating points of I-1^{th}~N^{th} curved profiles are detected.

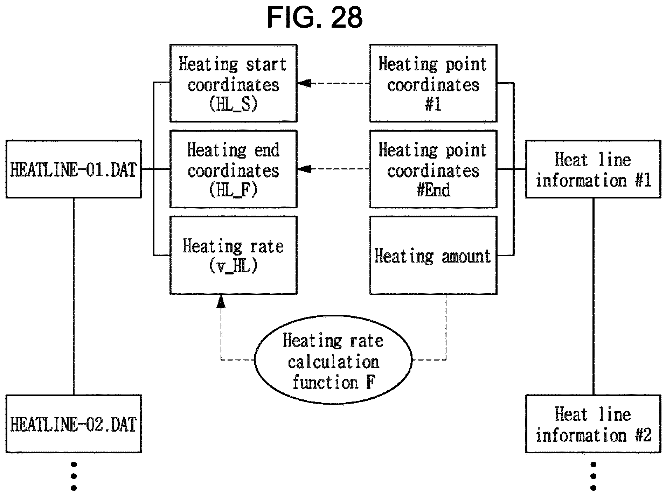

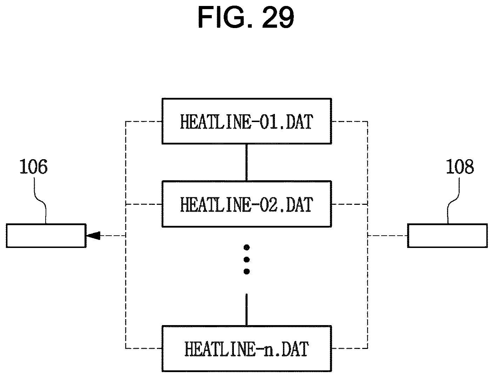

As shown in FIGS. 28 and 29, the backside heat line information transmission module 2108 performs a procedure of receiving the backside heat line information by communication with the backside heat line information generation module 2107, and transmitting the received backside heat line information to the backside heating mechanical device 2106 as described below, to induce the formation of an outer longitudinal curve in the component.

The heating point coordinates and heating amounts for each item of the heat line information data structure generated through the backside heat line information generation process become the elements of one heat line.
(1) Heating start coordinates of heat line: Coordinates HL_S of the first heating point
(2) Heating end coordinates of heat line: Coordinates HL_F of the last heating point
(3) Heating rate: An average value of heating amounts (angular deformation) is calculated. A heating rate v_HL is calculated from the average value of heating amounts through function F that calculates the heating rate from angular deformation. The function F is a function that exists in a heating program. In this instance, when the calculated rate is outside of the vmin-vmax range set by [heating constraints], vmin or vmax is set as it is. When the heating rate is smaller than vmin, vmin is set as the heating rate, and when the heating rate is larger than vmax, vmax is set as the heating rate.

When HL_S, HL_F, v_HL is set for each item of the heat line information data structure, the backside heat line information transmission module 2108 stores these values in a separate data file to allow the backside heating mechanical device 2106 to read (see FIGS. 28 and 29).

In this instance, in case that the total number of heat lines stored in the heat line information data is n, n dat files are generated and distinguished by number. The file name is set as [HEATLINE-01.DAT]~[HEATLINE-n.DAT]. When the total of n dat files are converted, the backside heat line information transmission module 2108 transmits them to the backside heating mechanical device 2106 all at once.

The backside heating mechanical device 2106 performs a procedure of forming an outer longitudinal curve in the component by machining the corresponding component according to the backside heat line information.

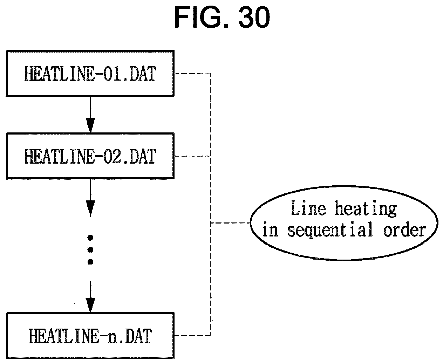

Under this procedure, as shown in FIG. 30, when the backside heating mechanical device 2106 receives the total of n heating task files of [HEATLINE-01.DAT]~[HEATLINE-n.DAT] from the backside heat line information transmission module 2108, the backside heating mechanical device 2106 sequentially performs the heating task from 01 to n. The heating task is performed at the recorded heating rate v_HL from the starting coordinates HL_S to the ending coordinates HL_F recorded in in each file.

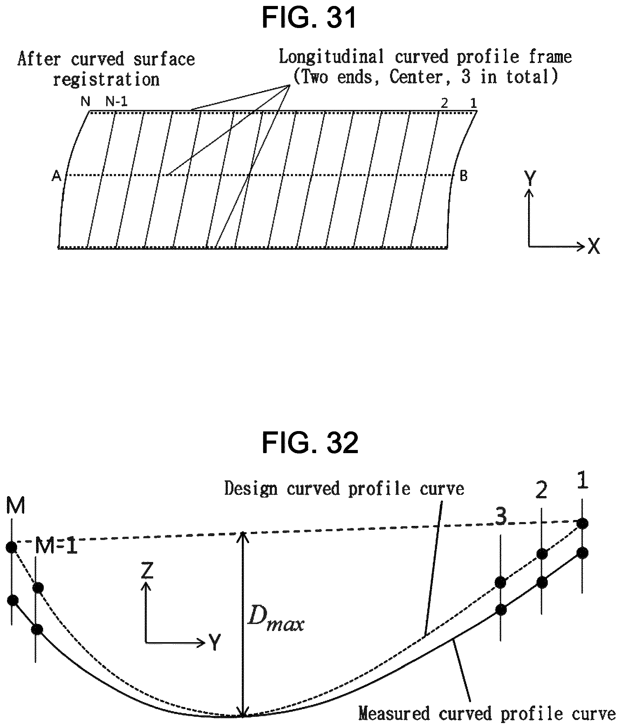

Under a situation in which the outer longitudinal curve is formed in the component by the backside heating of the backside heating mechanical device 2106, as shown in FIGS. 31 to 34, the backside re-heating determination module 2109 performs a procedure of registering the component design shape and the measured component shape, calculating Z component deviation dZi (i = 1, 2, 3 ..., M) of the coordinates of the component design shape points of the component design shape and the coordinates of the measured component shape points of the measured component shape, calculating an average value of the corresponding Z component deviations dZi (i = 1, 2, 3 ..., M), determining if the calculated average value is equal to or less than a preset tolerance value dL, when the average value is equal to or less than the tolerance value dL, determining to terminate the operation, and when the average value is equal to or more than the tolerance value dL, determining to re-heat the backside of the component.

Under this procedure, the backside re-heating determination module 2109 calculates an error of the longitudinal curve as an average error of the point coordinates on the curved profile frame data FT, and determines whether to terminate the operation or re-heat by comparing with dL (longitudinal curve tolerance) set by the system 2100.

In this instance, the backside re-heating determination module 2109 stores intersection lines at which a plane passing through center points A, B of two edges of the transverse curve and including the Z axis meets the design curved surface (the component design shape) and the measured curved surface (the measured component shape) as design longitudinal curved profile curve geometry and measured longitudinal curved profile curve geometry, respectively, and extracts point coordinates and stores in the form of frame data.

Subsequently, the backside re-heating determination module 2109 additionally stores two edges of the design longitudinal curve as the design longitudinal curved profile curve geometry and extracts point coordinates to generate design longitudinal curved profile frame data. The coordinates obtained by projecting the point coordinates onto the measured curved surface in the Z direction are stored in the measured longitudinal curved profile frame data. Each three design/measured longitudinal curved profile frame data is generated through the previous process.

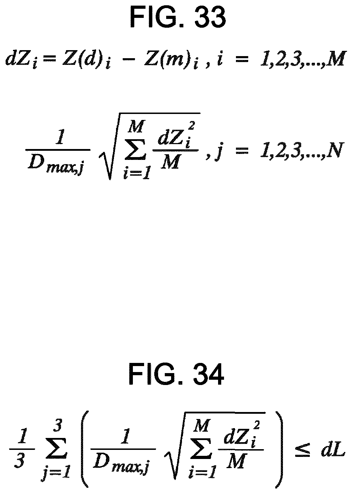

Subsequently, the backside re-heating determination module 2109 calculates the average error of longitudinal curved profile frame data by applying the following process:
(1) Detect the distance to each of M design curved profile frame data coordinates on a straight line connecting two end point coordinates (1^{st}, M^{th}) in j^{th} design curved profile frame data, and store the largest value as Dmax,j.
(2) When deviation of Z components of point coordinates on the design curved profile frame data and the measured curved profile frame data is dZi (i = 1, 2, ..., M), calculate an equation using the equation shown in FIG. 33 for the 1^{st} to N^{th} design curved profile (component design shape) frame data and measured curved profile (measured component shape) frame data.
(3) Repeat the previous process on the 1^{st} to N^{th} design curved profile frame data and measured curved profile frame data, and calculate an average value using the equation shown in FIG. 34.
(4) Compare the average value calculated through the previous process with dL (longitudinal curve tolerance).

As described above, since the present disclosure systematically arranges/provides, under a communication system of 'a design system for providing a component design shape', 'a measurement system for providing a measured component shape', 'a component turnover system for turning over a component' and 'a transverse/longitudinal curve forming system for forming a transverse/longitudinal curve in the component', <a computation module for loading the component design shape by communication with the design system and generating a main bending line for the corresponding component design shape>, <a computation module for extracting the main bending line, generating N (N = 1, 2, 3 ...) frame lines parallel on the left and right sides with respect to the corresponding main bending line at an interval, storing the XYZ coordinates of points of each frame line as 'component design shape parallel frame data FL', generating M (M = 1, 2, 3 ...) frame lines perpendicular to the main bending line or having an angle at an interval, and storing the XYZ coordinates of points of each frame line as 'component design shape perpendicular frame data FT'>, <a computation module for generating an imaginary plane vertically spaced along the Z axis from the component design shape, and setting a vertical distance e between each point of the corresponding imaginary plane and each frame line of the FL as coordinates (Pd, i) of each component design shape point Pd of the component design shape>, <a computation module for loading the measured component shape by communication with the measurement system, setting 'a situation in which there are K (K = 1, 2, 3 ...) virtual heating points in the measured component shape, and the coordinates (Pm, i) of the measured component shape points Pm become close to the coordinates (Pd, i) of the component design shape points Pd' by rotational movement of each of the corresponding measured component shape points Pm of the measured component shape by angular deformation of the virtual heating points, calculating the coordinates (Ph, j) of optimal virtual heating points satisfying the allowable criterion tol for all dZi (i = 1, 2, 3 ..., M) as practical heating point coordinates of the component design shape by repeatedly calculating Z-direction deviation dZi between the coordinates (Pm, i) and the coordinates (Pd, i) with varying numbers and positions of the virtual heating points, and calculating an angular deformation amount of the corresponding optimal virtual heating point as a practicable heating amount of the component design shape>, <a computation module for generating backside heat line information including the practicable heating point coordinates of the component design shape and the practicable heating amount of the component design shape> and <a mechanical device for forming an outer longitudinal curve in the component by machining the corresponding component according to the backside heat line information>, under the implementation environment of the present disclosure, it is possible to automatically perform 'a procedure of forming an outer longitudinal curve using backside heat lines' without operators' intervention, thereby helping shipbuilders to effectively avoid many conventional problems resulting from the operator-centered outer longitudinal curve forming procedure, i.e., difficult to define a tendency, impossible to standardize technology, overall productivity reduction, and repetition of the outer longitudinal curve forming procedure.

The present disclosure exerts useful effects over a wide range of applications requiring efficient curved hull plate forming.

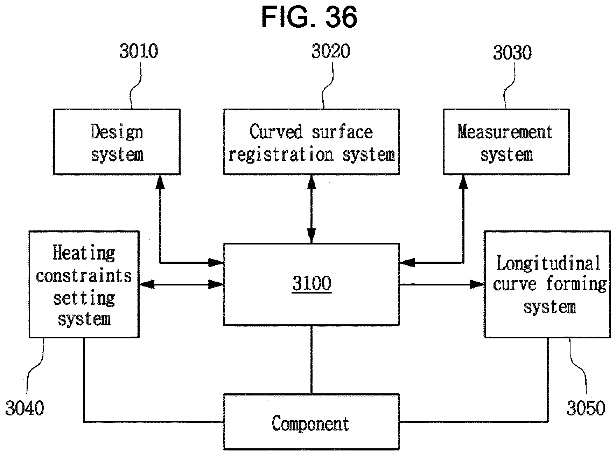

As shown in FIG. 36, the transverse curve forming system 3100 for curved hull plates not according to the present disclosure performs a procedure of forming a transverse curve in a component by communication with 'a design system 3010 for providing a component design shape (a curved surface design shape)', 'a curved surface registration system 3020 for performing a procedure of registering a design curved surface shape and a measured curved surface shape', 'a measurement system 3030 for providing a measured component shape (a measured curved surface shape)', 'a heating constraints setting system 3040 for setting heating constraints' and 'a longitudinal curve forming system 3050 for forming a longitudinal curve in a component'.

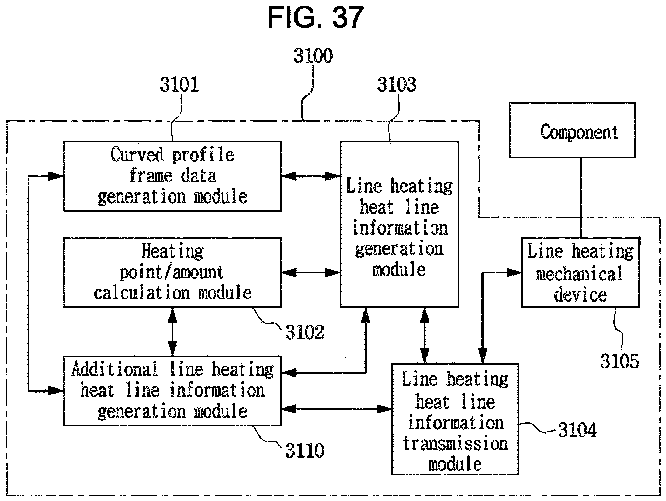

In this instance, as shown in FIG. 37, the transverse curve forming system 3100 for curved hull plates not according to the present disclosure takes a closely combined configuration of a curved profile frame data generation module 3101, a heating point/amount calculation module 3102, a line heating heat line information generation module 3103, an additional line heating heat line information generation module 3110, a line heating heat line information transmission module 3104 and a line heating mechanical device 3105.

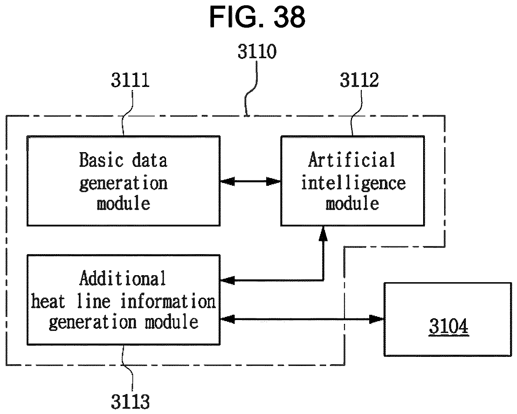

In this case, the additional line heating heat line information generation module 3110 uniquely performs 'a function of newly supplementing/adding additional line heating heat line information to the existing line heating heat line information array generated by the line heating heat line information generation module 3103', and as shown in FIG. 38, takes a closely combined configuration of a basic data generation module 3111, an artificial intelligence module 3112 and an additional heat line information generation module 3113.

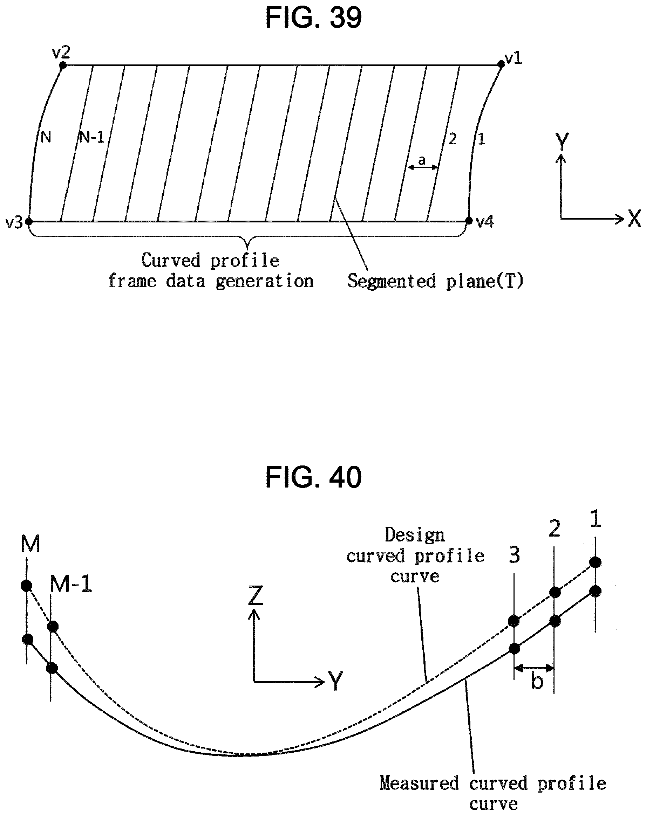

First, as shown in FIGS. 39 to 41, the curved profile frame data generation module 3101 performs a procedure of generating measured curved profile frame data and design curved profile frame data.

Under this procedure, the curved profile frame data generation module 3101 divides two Y direction edges v1~v2, v3~v4 of the registered design curved surface at a predetermined interval a, and at the same time, when a plane T including the Z axis intersects the design curved surface and the measured curved surface, generates the intersection line of each curved surface as curved profile curve geometry of the design curved surface and the measured curved surface (2^{nd}~N-1^{th} in FIG. 39).

Additionally, the curved profile frame data generation module 3101 generates two edges v1~v4, v2~v3 of the transverse curve at two ends of the design curved surface itself as design curved profile geometry, and generate each of two curves formed by projecting each design curved profile geometry onto the measured curved surface in the Z direction as measured curved profile geometry (1^{st} and N^{th} in FIG. 39).

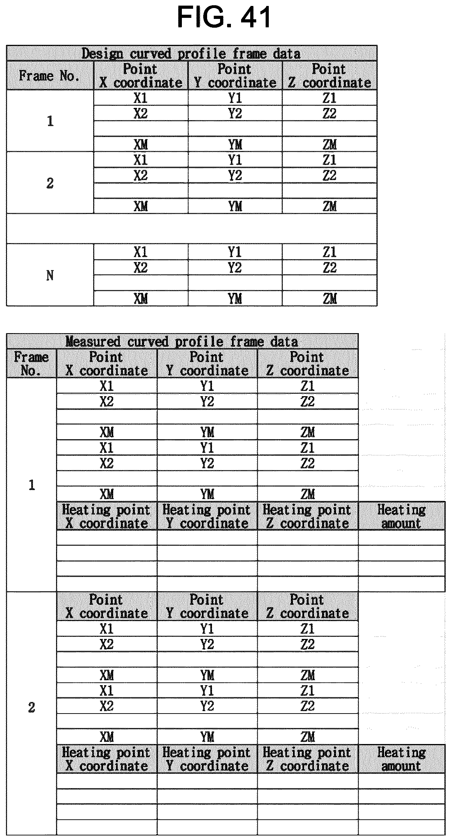

Additionally, as shown in FIGS. 40 and 41, the curved profile frame data generation module 3101 extracts M point coordinates on the curve at an interval b from the design curved profile curve geometry (including two end points) and stores in the design curved profile frame data structure. Again, M intersection point coordinates obtained by projecting each design curved profile point onto the measured curved profile curve geometry in the Z direction again are stored in the measured curved profile frame data structure. In this instance, the configuration of the design curved profile frame data and the measured curved profile frame data is as follows, and the measured curved profile frame data structure includes not only the curve point coordinates but also heating point coordinates and heating amount columns, and their values are generated and stored in the [heating point and heating amount for each frame data] step.

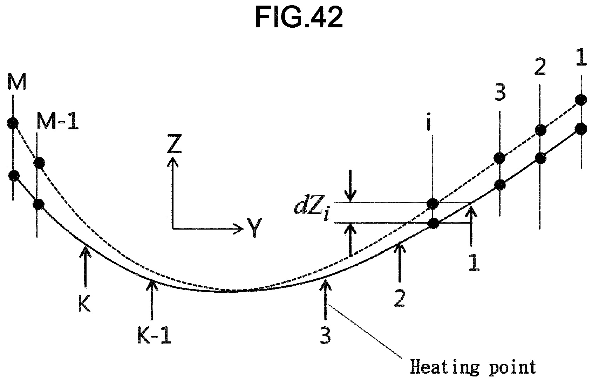

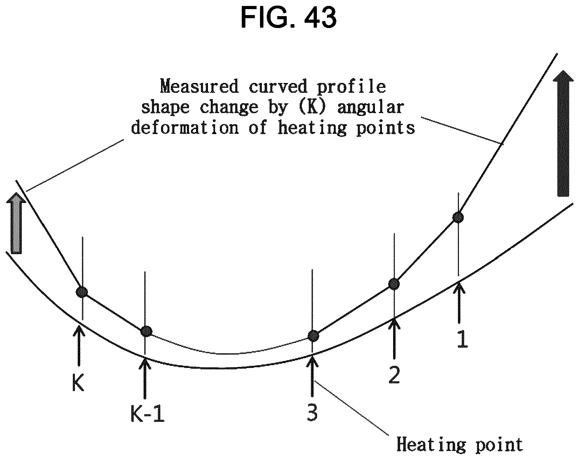

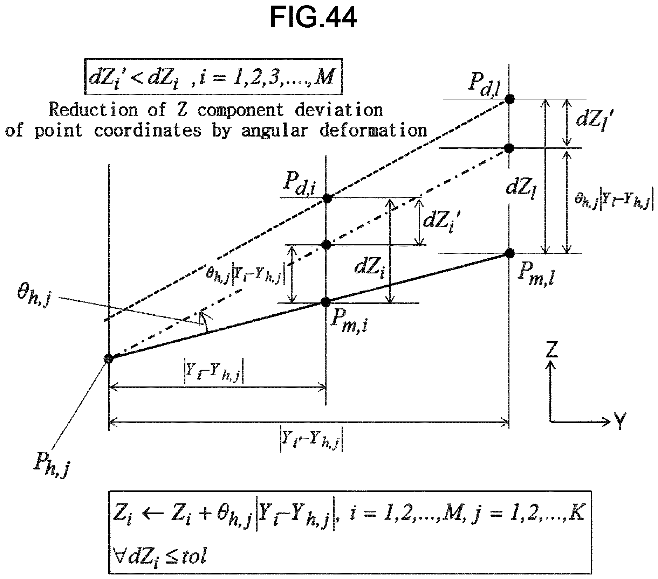

Meanwhile, as shown in FIGS. 42 to 44, the heating point/amount calculation module 3102 performs a procedure of calculating a heating point/amount for each measured curved profile frame data, and calculating a heating point/amount for each design curved profile frame data.

When there is a heating point in the component, angular deformation occurs by rotational deformation by bending the component with respect to the heating point. When there is a plurality of heating points (K heating points) on the measured curved profile curve, the point coordinates (Pm, i) on the measured curved profile frame data become close to the point coordinates (Pd, i) on the design curved profile frame data by rotational movement by angular deformation of each heating point. That is, each of M Z-direction (heightwise direction) deviations dZi of the point coordinates of the design curved profile frame data and the measured curved profile frame data becomes close to 0 by K angular deformations.

Under this situation, as shown in FIGS. 42 to 44, the heating point/amount calculation module 3102 repeatedly calculates a height deviation dZi for each case with varying numbers and positions of heating points, and for all dZi (i = 1, 2, ..., M), when the allowable criterion tol is satisfied, stores the heating point coordinates (Ph, j) of the corresponding case and the angular deformation amount at each heating point in the measured curved profile frame data structure. In this instance, the angular deformation amount is stored in the heating amount column. This process is performed on all the design curved profiles and the measured curved profiles, and the heating point position coordinates and the angular deformation amount for each curved profile are stored in each measured curved profile frame data structure.

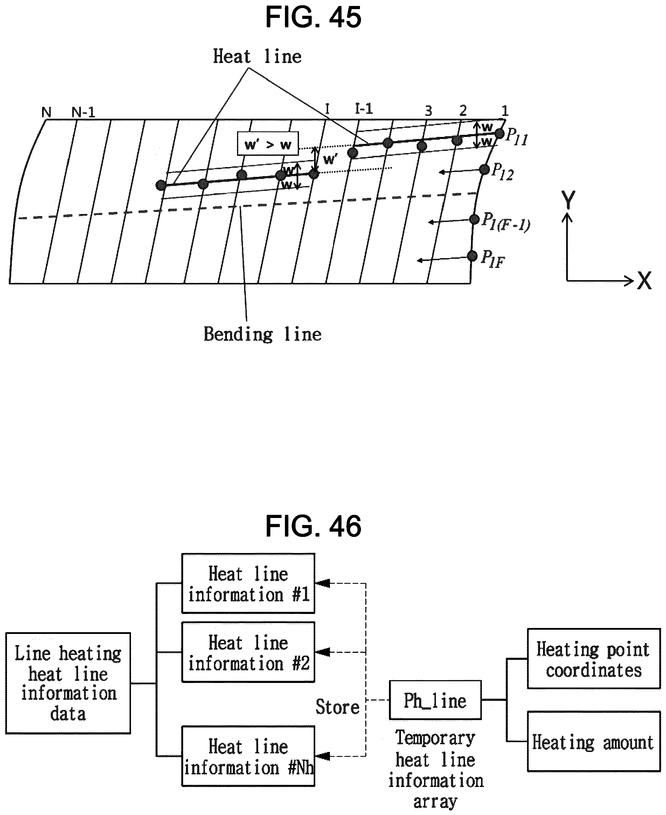

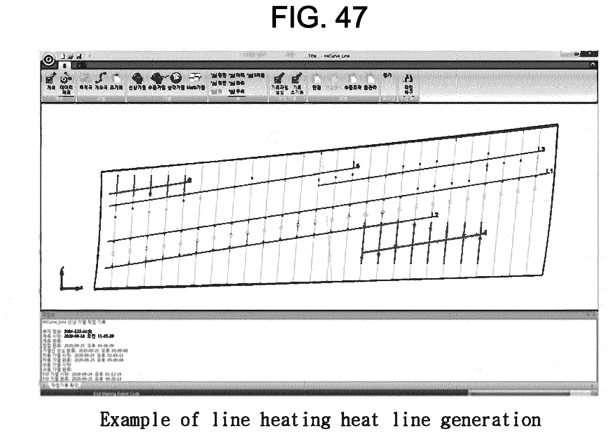

Meanwhile, as shown in FIGS. 45 to 47, the line heating heat line information generation module 3103 performs a procedure of generating line heating heat line information including starting point coordinates and ending point coordinates of the line heating heat line based on the heating point/amount for each measured curved profile frame data and the heating point/amount for each design curved profile frame data.

Under this procedure, the line heating heat line information generation module 3103 generates line heating heat line information when the heating point and the heating amount are stored in all the measured curved profile frame data.

The rule for generating the line heating heat line information is as follows (see FIGS. 45 to 47).
(1) The heating points (a total of F heating points) of the 1^{st} measured curved profile frame data are stored as P11, P12, ..., P1F, respectively. In this instance, the heating points are stored in the descending order of Y coordinates. P11 is stored in Ph_1 again.
(2) A virtual straight line which passes through Ph_1 and is parallel to the bending Line is assumed. The (X, Y, Z) coordinates and the heating amount of Ph_1 are added to an arbitrary {Ph_line}. {Ph_line} is a temporary array and stores the heating point coordinates and the heating amount of each heating point.
(3) For the heating points of the 2^{nd}~N^{th} measured curved profile frame data, detect whether there is any corresponding heating point in a distance w from a virtual straight line in a sequential order from the 2^{nd} measured curved profile frame data, and if any, the coordinates and the heating amount of the corresponding heating point are added to array {Ph_line}.
(4) When the coordinates and the heating amounts of the heating points on the last N^{th} measured curved profile frame data are added to {Ph_line}, {Ph_line} is added to the heat line information data structure. P12 of 3-1) is stored in Ph_1 again, {Ph_line} is initialized (array content is all deleted), and the coordinates and the heating amount of Ph_1 are added to {Ph_line}. Subsequently, 3-2)~3-3) are repeated. Likewise, P13~P1F undergo the previous process.
(5) When there is a heating point disposed within the distance w in the I-1^{th} measured curved profile frame data and there is no heating point in the I^{th} measured curved profile frame data, i.e., when the minimum value of the distances of the heating point from the virtual straight line is w', where w'>w, array {Ph_line} addition operation ends, and {Ph_line} is added to the heat line information data structure.
(6) Among the I^{th} curved profile frame data heating points, a heating point disposed at the distance of w' from the virtual straight line is newly stored in Ph_1. Array {Ph_line} is initialized (array content is all deleted), and Ph_1 is added.
(7) The previous step is repeated. Here, frame data heating points of the I-1^{th}~N^{th} measured curved profiles are detected.

Meanwhile, the additional line heating heat line information generation module 3110 of the present disclosure performs a procedure of generating additional line heating heat line information including starting point coordinates and ending point coordinates of additional line heating heat lines by training deviation distribution data between the measured curved profile and the design curved profile via 'image data based conditional generated adversarial network (cGAN)'.

In this instance, on the side of the basic data generation module 3111 shown in FIG. 38, the additional line heating heat line information generation module performs a procedure of generating deviation distribution data between the measured curved profile and the design curved profile, and the additional heat line information generation module 3113 performs a procedure of receiving the starting point coordinates and the ending point coordinates of the additional line heating heat lines from the artificial intelligence module 3112, and generating additional line heating heat line information using the received coordinates, to induce the addition of the additional line heating heat line information to the line heating heat line information array generated by the line heating heat line information generation module 3103.

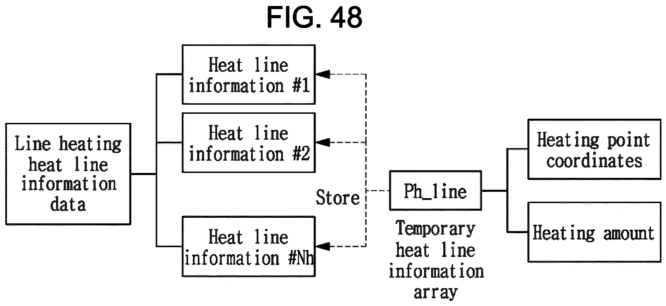

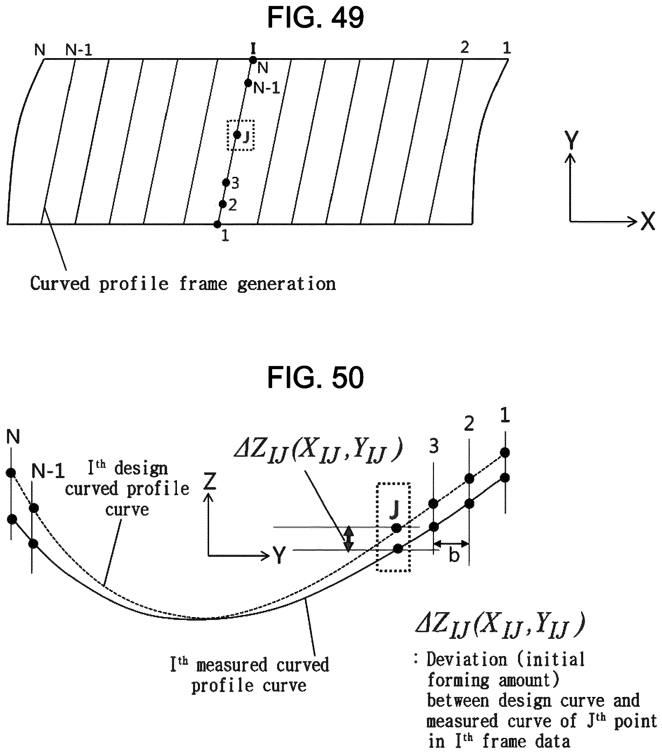

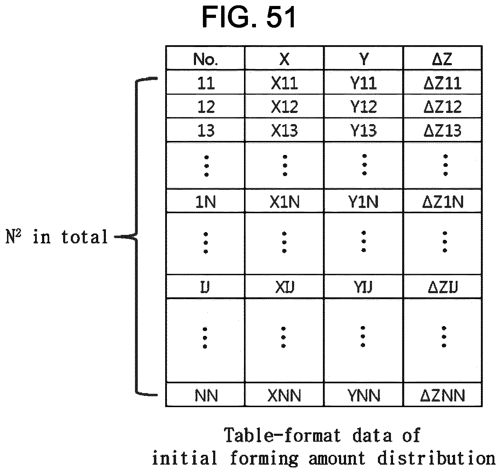

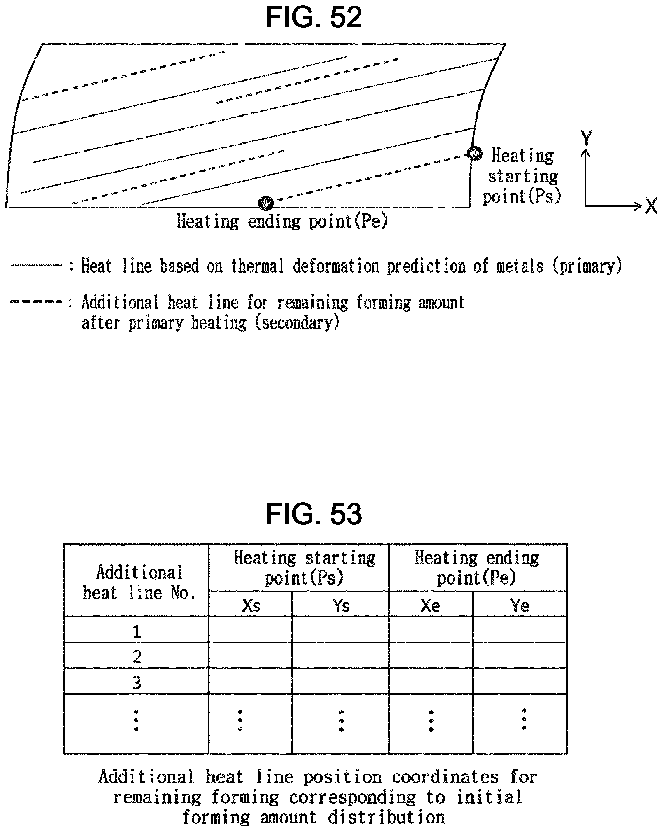

Under this procedure, as shown in FIGS. 48 to 53, the basic data generation module 3111 forms a pair of Z-direction height deviations (initial required forming amount) of the X, Y coordinates of point positions on all the measured curved profile frame data and point positions on the design curved profile frame data at the corresponding locations, discretizes a distribution of the initial forming amount in the component such as (Xi, Yi, ΔZi) and stores in the form of a table. In this instance, N points on the frame data which are the same as the number of frames are extracted.

Additionally, the basic data generation module 3111 inputs the deviation (initial forming amount) distribution data between the measured curved surface and the design curved surface in the form of a table to the artificial intelligence module 3112, and receives the output of two end (heating starting point and ending point) coordinates of an additional heat line to be additionally generated after 'the heating task based on thermal deformation prediction technique of metals' by the line heating heat line information generation module 3103.

In this instance, since the result by the artificial intelligence module 3112 represents the additional heat line as a rectangle having the thickness of 2t in the (s, t) domain normalization range, when the coordinates of two end points of the center line of the rectangle are P's(s, t), P'e(s, t), these values are converted into the coordinates Ps(X, Y), Pe(X, Y) in the original (X, Y) domain of the component by applying the inverse transform Tinv of transform T used in normalization mapping. The finally converted Ps(X, Y), Pe(X, Y) become the predicted starting position coordinates and ending position coordinates of the additional heat line, respectively.

Here, the additional heat line information generation module 3113 generates the heat line information from the received starting/ending coordinates of the additional heat line, and adds to the 'line heating heat line information array based on thermal deformation prediction technique of metals' by the line heating heat line information generation module 3103.

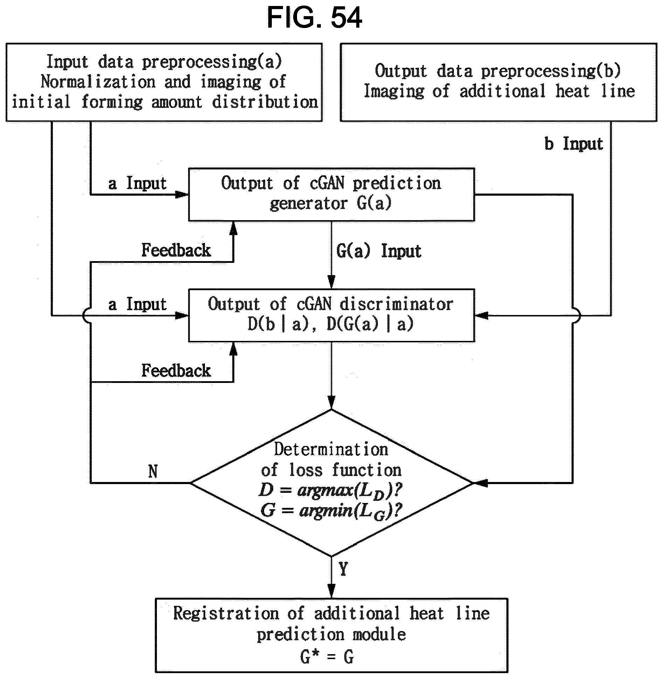

In this instance, as shown in FIG. 54, the artificial intelligence module 3112 performs 'an input data preprocessing procedure of normalizing and imaging the deviation distribution data', 'an output data preprocessing procedure of imaging the additional heat line', 'a procedure of receiving the input data preprocessing result information and outputting cGAN prediction generator G(a)', 'a procedure of receiving the output data preprocessing result information and the G(a), and outputting cGCAN discriminator D(b|a), D(G(a)|a)', 'a procedure of determining a loss function', 'a procedure of repeating the output procedure of the cGAN prediction generator G(a) and the output procedure of the cGCAN discriminator D(b|a), D(G(a)|a) according to the loss function determination result' and 'a procedure of registering an additional heat line prediction module'.

Hereinafter, the function performing procedure of the artificial intelligence module 3112 will be described in detail.

### (1) Input data preprocessing

### (1-1) Normalization task

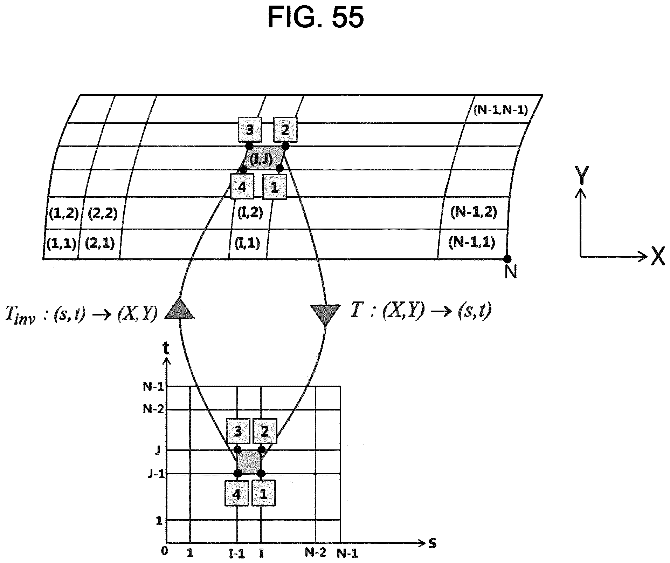

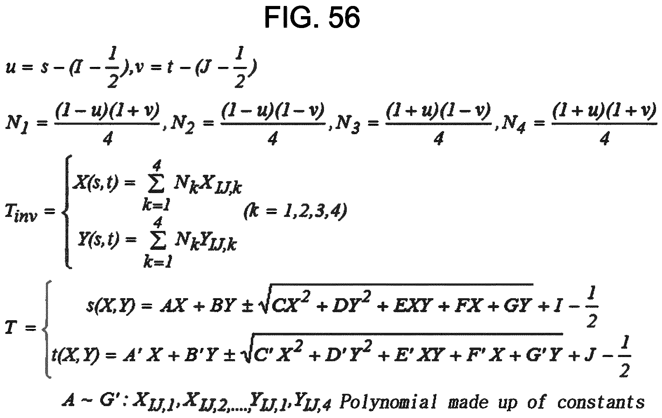

As shown in FIGS. 55 and 56, in general, an initial forming amount distribution (Xi, Yi, ΔZi) differs in the domain of the range (X, Y) according to the component shape for each training data, so the artificial intelligence module 3112 first performs a task of normalizing them to square having the length of N-1 of the range (s, t).

The domain of the range (X, Y) of the forming component is a square shape in phase, but in general, its boundary includes a curve, not a straight line. Accordingly, since linear transformation into a square shape is impossible, the domain of the range (X, Y) is divided into (N-1)² small squares using (Xi, Yi) extracted by the previous Table.

Subsequently, the artificial intelligence module 3112 transforms into a square having the length of 1 of the domain (s, t) using iso-parametric shape approximation used in a finite element method for each square. Here, operator that transforms (X, Y) -> (s, t) is T and (s, t) -> (X, Y) transformation corresponding to the inverse computation is Tinv. In the drawing, XIJ,k and YIJ,k are X, Y coordinates of k^{th} nodal point of the square range (I, J) (k = 1, 2, 3, 4).

### (1-2) Image conversion task

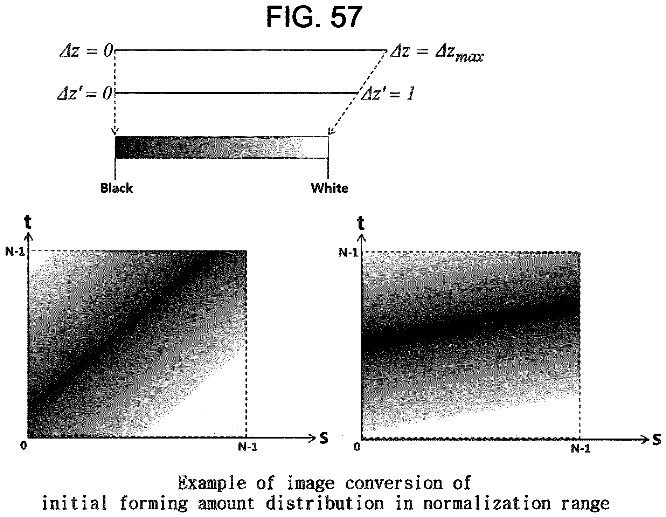

As shown in FIG. 57, with respect to the normalized distribution (si, ti, ΔZi), the artificial intelligence module 3112 converts each ΔZi into a value between 0 and 1. The conversion is performed by dividing each ΔZi by ΔZmax, and its result is ΔZi'. ΔZmax is sufficiently larger than ΔZi occurring in the common initial forming amount deviation, and is a value set to a fixed constant by the system. Subsequently, each ΔZi' is mapped to a white-black image of gray scale. ΔZi' = 0 is mapped to black color, ΔZi' = 1 is mapped to white color, and intervening values are mapped to gray colors that are proportional to the values. White and black colors distributed in the remaining domain (s, t) other than discretely distributed (si, ti, ΔZi') are applied by linear interpolation of ΔZi' values of each (si, ti, ΔZi').

### (2) Output data preprocessing

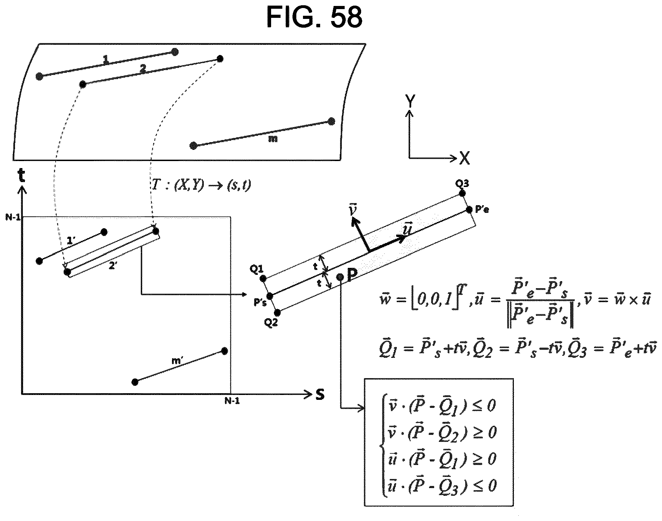

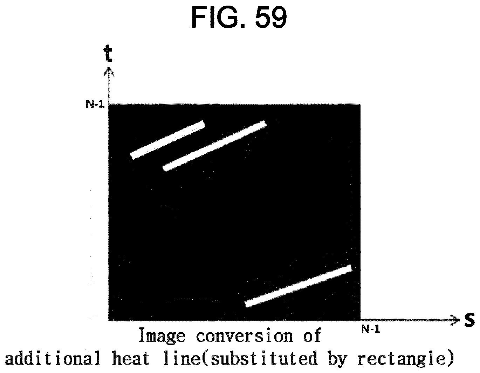

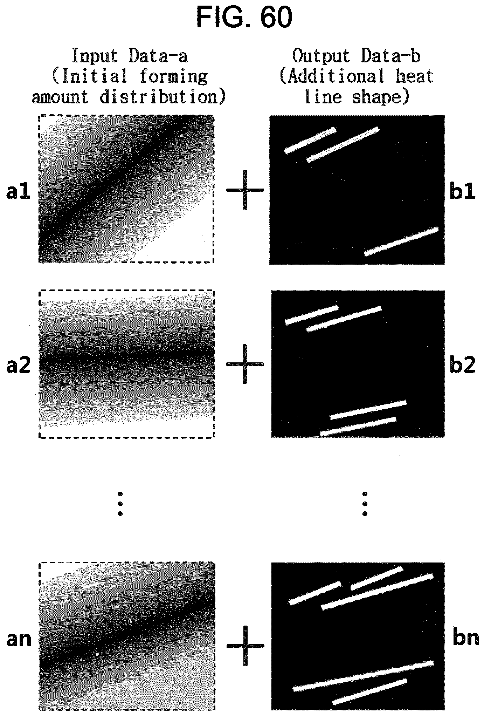

As shown in FIGS. 58 to 60, the artificial intelligence module 3112 obtains starting point P's(ss, ts) and ending point P'e(se, te) mapped to the range (s, t) by applying the transform Tinv used in (1) input data preprocessing process to the starting point Ps(Xs, Ys) and the ending point Pe(Xe, Ye) of each additional heat line in the same way.

The additional heat line also needs be converted into an image in response to the image conversion of the initial forming amount distribution, and by definition, a line cannot be visually represented, so a rectangular region having a thickness t in two directions perpendicular to a straight line connecting P's and P'e on the straight line is applied as an image of the heat line. Here, t is a system-defined constant, and is a sufficiently small value compared to the size N-1 of the transformation range of the component. Accordingly, the rectangular region corresponding to the additional heat line may be defined as shown, and when the number of additional heat lines is m, a unique region may be quantitatively defined for each m.

Subsequently, the artificial intelligence module 3112 only distinguishes the additional heat line region and the remaining region as black and white of 0 and 1, and performs image conversion to change the heat line region to white and the remaining region to black. A total of n pairs of input and output training data in the form of image are formed through the (1) and (2) processes, and a set of input data is represented as a = {a1, a2, ..., an}, and a set of output data is represented as b = {b1, b2, ..., bn}.

### (3) cGAN operation

The artificial intelligence module 3112 executes generator operator G and discriminator operator D for the inputted set of input/output training data a = {a1, a2, ..., an}, b = {b1, b2, ..., bn}, respectively. The G and D are all convolution based operator functions.

The generator G receives each initial forming amount distribution image ai(i = 1, 2, ..., n) corresponding to the input, and outputs an additional heat line shape image similar to bi(i = 1, 2, ..., n). This is represented as G(a) = {G(a1), G(a2), ..., G(an)}.

The discriminator D receives an input-output pair (ai, bi) of the original training data and an image pair (ai, G(ai)) generated through the original input and the G, and outputs conditional probabilities D(bi|ai) and D(G(ai)|ai) which discriminate if bi and G(ai) is the actual image bi used in training for each ai, respectively. Since they are probabilities, they have a value between 0 and 1.

### (4) Loss function determination

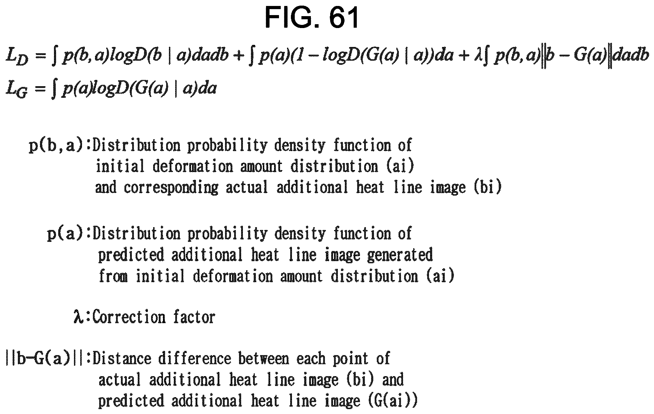

To evaluate the prediction accuracy of the additional heat lines, with regard to two types of loss functions LD and LG shown in FIG. 61, the artificial intelligence module 3112 evaluates if discriminator D maximizes LD and generator G minimizes LG.

When any one of the two is not satisfied, the artificial intelligence module 3112 repeatedly performs feedback in a manner of increasing the probability that discriminator D determines that the actual image bi is bi and the generated image G(ai) is not bi, so that generator G outputs an image G(ai) more similar to the actual image bi.

When the condition for maximizing LD and minimizing LG (argmax, argmin) is satisfied, the artificial intelligence module 3112 terminates the training, and finally determines generator G in the corresponding state as a value G* that predicts the position and shape of the additional heat line from the initial forming amount distribution.

Meanwhile, the line heating heat line information transmission module 3104 shown in FIG. 37 performs a procedure of receiving the line heating heat line information and the additional line heating heat line information by communication with the line heating heat line information generation module 3103 and the additional line heating heat line information generation module 3110, and transmitting the received line heating heat line information and additional line heating heat line information to the line heating mechanical device 3105, to induce the formation of a transverse curve in the component.

The heating point coordinates and heating amounts for each item of the heat line information data structure generated through the line heating heat line information generation process become the elements of one heat line.
(1) Heating start coordinates of heat line: Coordinates HL_S of the first heating point
(2) Heating end coordinates of heat line: Coordinates HL_F of the last heating point
(3) Heating rate: An average value of heating amounts (angular deformation) is calculated. A heating rate v_HL is calculated from the average value of heating amounts through function F that calculates the heating rate from angular deformation. The function F is a function that exists in a heating program. In this instance, when the calculated rate is outside of the vmin-vmax range set by [heating constraints], vmin or vmax is set as it is. When the heating rate is smaller than vmin, vmin is set as the heating rate, and when the heating rate is larger than vmax, vmax is set as the heating rate.

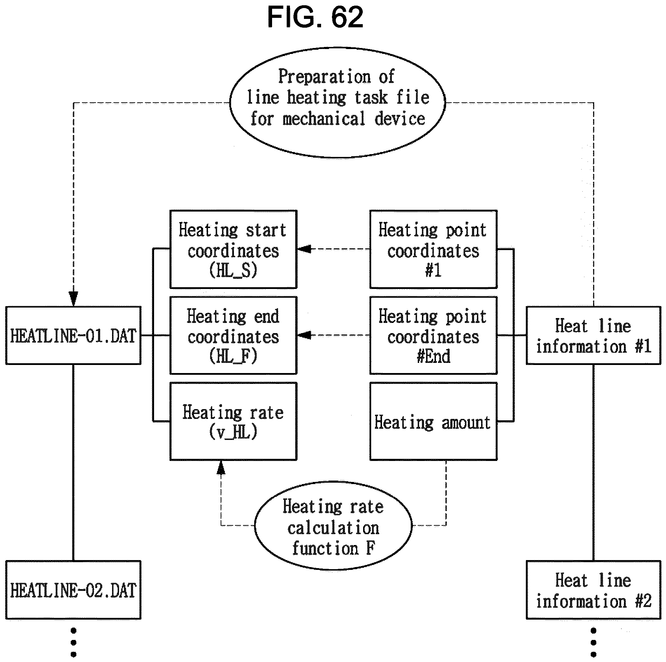

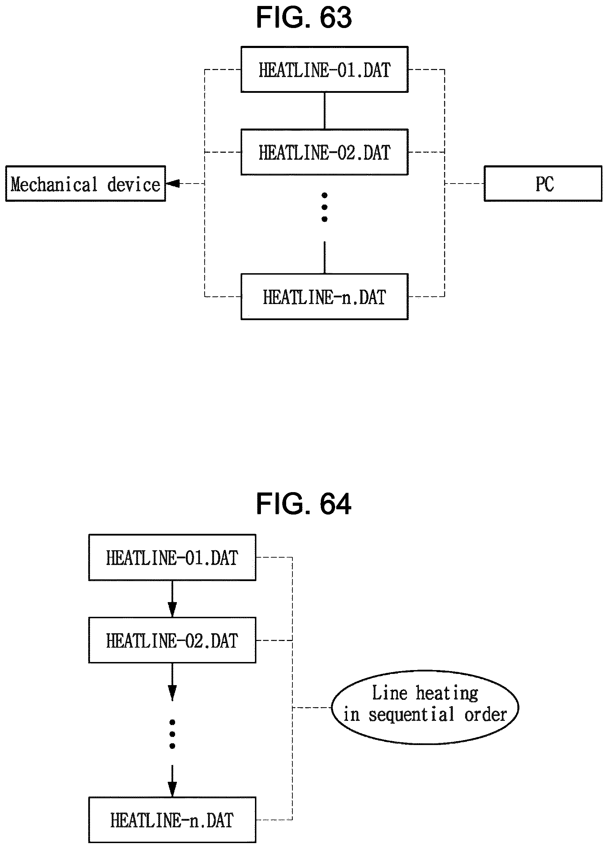

When HL_S, HL_F, v_HL is set for each item of the heat line information data structure, the line heating heat line information transmission module 3104 stores these values in a separate data file to allow the backside heating mechanical device 3106 to read (see FIGS. 62 and 63).

In this instance, in case that the total number of heat lines stored in the heat line information data is n, n dat files are generated and distinguished by number. The file name is set as [HEATLINE-01.DAT]~[HEATLINE-n.DAT]. When the total of n dat files are converted, the line heating heat line information transmission module 3104 (PC) transmits them to the backside heating mechanical device 3106 all at once.

The line heating mechanical device 3105 performs a procedure of forming a transverse curve in the component by machining the corresponding component according to the line heating heat line information and the additional line heating heat line information.

Under this procedure, as shown in FIG. 64, when the line heating mechanical device 3105 receives the total of n heating task files of [HEATLINE-01.DAT]~[HEATLINE-n.DAT] from the line heating heat line information transmission module 3104, the line heating mechanical device 3105 sequentially performs the heating task from 01 to n. The heating task is performed at the recorded heating rate v_HL from the starting coordinates HL_S to the ending coordinates HL_F recorded in in each file.

As described above, since the present disclosure newly supplements/adds <an artificial intelligence computation module for generating additional line heating heat line information including starting point coordinates and ending point coordinates of additional line heating heat lines by training deviation distribution data between the measured curved profile and the design curved profile (i.e., initial required forming amount distribution data) via an image data based conditional generated adversarial network (cGAN)> under the communication system of the curved profile frame data generation module, the heating point/amount calculation module and the line heating heat line information generation module of the transverse curve forming system, under the implementation environment of the present disclosure, it is possible to perform a series of transverse curve forming procedures 'with the supplementation/addition of additional line heating heat line information to the existing line heating heat line information array', thereby helping shipbuilders to stably omit '2~3 additional measurement and additional heating procedures including a procedure of verifying a tolerance', resulting in significant improvements in the overall ship production efficiency.

The present disclosure exerts useful effects over a wide range of applications requiring efficient curved hull plate forming.

### [Detailed Description of Main Elements]

2: Curved plate
10: Automatic curved plate forming apparatus
20: Control device
30: Monitor
100: Bed
102: Rail
110: Heating head deformation measuring sensor
200: Carrier
202: Column
204: Guide beam
206: Guide rail
500: Robotic arm
510: Carriage
520: Rotation axis base
522: Mounting block
530: First arm
532: Extended block
540: Second arm
550: Third arm
552: Fourth rotation axis
550: Third arm
560 Fifth arm
570 Sixth rotation axis
580: Support
590: Heating head
600: Gap measuring sensor
700: Shape measuring sensor
X1~X6: First to sixth axes
M1~M6: Motor
Z1: Measurement zone
2010: Design system
2020: Curved surface registration system
2030: Measurement system
2040: Component turnover system
2050: Transverse/longitudinal curve forming system
2100: Outer longitudinal curve forming system for curved hull plates
2101: Interface module
2102: Bending line extraction module
2103: Frame data generation module
2104: Component design shape point coordinates setting module
2105: Heating point/amount calculation module
2106: Backside heating mechanical device
2107: Backside heat line information generation module
2108: Backside heat line information transmission module
2109: Backside re-heating determination module
3010: Design system
3020: Curved surface registration system
3030: Measurement system
3040: Heating constraints setting system
3050: Longitudinal curve forming system
3100: Transverse curve forming system for curved hull plates
3101: Curved profile frame data generation module
3102: Heating point/amount calculation module
3103: Line heating heat line information generation module
3104: Line heating heat line information transmission module
3105: Line heating mechanical device
3111: Basic data generation module
3112: Artificial intelligence module
3113: Additional heat line information generation module

## Claims

1. An automatic curved plate forming apparatus, comprising:
a bed (100) on which a curved plate (2) is loaded;
a rail (102) installed in a lengthwise direction on left and right sides of the bed (100);
a carrier (200) movably mounted on the two rails (102);
a guide beam (204) installed across two columns (202) that extend upward from each carrier (200);
a carriage (510) movably connected to the guide beam (204);
a rotation axis base (520) mounted on a side of the carriage (510);
a 6-axis robotic arm (500) including a first arm (530) connected to the rotation axis base (520) rotatably around a first axis (X1);
a mount (580) connected to a working terminal of the robotic arm (500) rotatably and pivotably in a vertical direction; and
a heating head (590) mounted on a support (592) that extends down from the mount (580) to perform high frequency induction heating, facing the curved plate (2),
**characterized in that** the first axis (X1) is perpendicular to the side of the carriage (510) on which the rotation axis base (520) is mounted, and the first axis (X1) extends in a direction parallel to a ground.

2. The automatic curved plate forming apparatus according to claim 1, wherein the robotic arm (500) includes:
the first arm (530);
a second arm (540) connected to a side of the first arm (530) rotatably around a second axis (X2) that extends in a direction intersecting the first axis (X1);
a third arm (550) connected to a rotating end (544) of the second arm (540) rotatably around a third axis (X3) that extends in a direction parallel to the second axis (X2);
a fourth rotation axis (552) extending down from a side of the third arm (550) and installed rotatably around a fourth axis (X4) that extends in a direction intersecting the third axis (X3);
a fifth arm (560) connected to a front end of the fourth rotation axis (552) rotatably around a fifth axis (X5) that extends in a direction intersecting the fourth axis (X4); and
a sixth rotation axis (570) connected to an end of the fifth arm (560) rotatably around a sixth axis (X6) that extends in a direction intersecting the fifth axis (X5), and having an end connected to the mount (580) to operate the mount (580).

3. The automatic curved plate forming apparatus according to claim 2, wherein the mount (580) includes a bottom plate (582), and a rear inclined plate (584) inclined upward at an angle (θ) in an outer upward direction from a rear surface of the bottom plate (582),
an end surface (572) of the sixth rotation axis (570) is connected to the rear inclined plate (584), facing the rear inclined plate (584), and
the inclination angle (θ) of the rear inclined plate (584) to the bottom plate (582) is 40° to 50°.

4. The automatic curved plate forming apparatus according to claim 2, wherein the first arm (530) includes an extended block (532) that extends from a radial outer side of the first arm (530) to use the second axis (X2) intersecting the first axis (X1) as a shaft center, and
a base end portion (542) of the second arm (540) is connected to the extended block (532) rotatably around the second axis (X2).

5. The automatic curved plate forming apparatus according to claim 2, wherein the fourth axis (X4) which is a center of rotation of the fourth rotation axis (552) is formed at a location outside of the rotating end (544) of the second arm (540).

6. The automatic curved plate forming apparatus according to claim 1, wherein a gap measuring sensor (600) for measuring a gap between the heating head (590) and the curved plate (2) is installed on a lower surface of the bottom plate (582) of the mount (580), each one installed at nearby three locations adjacent to a perimeter of the heating head (590) and additional one installed at one or more locations between the three locations.

7. The automatic curved plate forming apparatus according to claim 1, wherein a plurality of shape measuring sensors (700) for measuring a shape of a part of the curved plate (2) is installed on a lower surface of one side of the carriage (510), and
the shape measuring sensors (700) are installed at five or more locations in a transverse direction of the curved plate (2) and in two or more lines in a longitudinal direction.

8. The automatic curved plate forming apparatus according to claim 1, wherein a heating head deformation measuring sensor (110) for measuring deformation of the heating head (590) is installed in the carrier (200).

9. The automatic curved plate forming apparatus according to claim 1, wherein a heating head deformation measuring sensor (110) for measuring deformation and position of the heating head (590) is installed in the carrier (200).

## Patentansprüche

1. Automatische Einrichtung zum Ausbilden einer gekrümmten Platte, umfassend:
ein Bett (100), auf das eine gekrümmte Platte (2) aufgelegt wird;
eine Schiene (102), die in einer Längsrichtung auf der linken und der rechten Seite des Bettes (100) installiert ist;
einen Träger (200), der beweglich auf den zwei Schienen (102) montiert ist;
einen Führungsbalken (204), der über zwei Säulen (202) hinweg installiert ist, die sich von jedem Träger (200) nach oben erstrecken;
einen Schlitten (510), der beweglich mit dem Führungsbalken (204) verbunden ist;
eine Drehachsenbasis (520), die an einer Seite des Schlittens (510) montiert ist;
einen 6-achsigen Roboterarm (500), der einen ersten Arm (530) beinhaltet, der mit der Drehachsenbasis (520) um eine erste Achse (X1) drehbar verbunden ist;
eine Halterung (580), die mit einem Arbeitsterminal des Roboterarms (500) drehbar und schwenkbar in einer vertikalen Richtung verbunden ist; und
einen Heizkopf (590), der auf einem Träger (592) montiert ist, der sich von der Halterung (580) nach unten erstreckt, um Hochfrequenz-Induktionserwärmung durchzuführen, und der gekrümmten Platte (2) zugewandt ist,
**dadurch gekennzeichnet, dass** die erste Achse (X1) senkrecht zu der Seite des Schlittens (510) ist, auf der die Drehachsenbasis (520) montiert ist, und sich die erste Achse (X1) in einer Richtung parallel zu einem Boden erstreckt.

2. Automatische Einrichtung zum Ausbilden einer gekrümmten Platte nach Anspruch 1, wobei der Roboterarm (500) beinhaltet:
den ersten Arm (530);
einen zweiten Arm (540), der mit einer Seite des ersten Arms (530) drehbar um eine zweite Achse (X2) verbunden ist, die sich in einer Richtung erstreckt, die die erste Achse (X1) schneidet;
einen dritten Arm (550), der mit einem drehenden Ende (544) des zweiten Arms (540) drehbar um eine dritte Achse (X3) verbunden ist, die sich in einer Richtung parallel zu der zweiten Achse (X2) erstreckt;
eine vierte Drehachse (552), die sich von einer Seite des dritten Arms (550) erstreckt und drehbar um eine vierte Achse (X4) installiert ist, die sich in einer Richtung erstreckt, die die dritte Achse (X3) schneidet;
einen fünften Arm (560), der mit einem vorderen Ende der vierten Drehachse (552) drehbar um eine fünfte Achse (X5) verbunden ist, die sich in einer Richtung erstreckt, die die vierte Achse (X4) schneidet; und
eine sechste Drehachse (570), die drehbar mit einem Ende des fünften Arms (560) um eine sechste Achse (X6) verbunden ist, die sich in einer Richtung erstreckt, die die fünfte Achse (X5) schneidet, und ein Ende aufweist, das mit der Halterung (580) verbunden ist, um die Halterung (580) zu betreiben.

3. Automatische Einrichtung zum Ausbilden einer gekrümmten Platte nach Anspruch 2, wobei die Halterung (580) eine Bodenplatte (582) und eine geneigte Rückplatte (584) beinhaltet, die in einem Winkel (θ) in einer äußeren nach oben gerichteten Richtung von einer Rückoberfläche der Bodenplatte (582) aus nach oben geneigt ist,
eine Endoberfläche (572) der sechsten Drehachse (570) mit der geneigten Rückplatte (584) verbunden ist und der geneigten Rückplatte (584) zugewandt ist, und
der Neigungswinkel (θ) der geneigten Rückplatte (584) zu der Bodenplatte (582) 40° bis 50° beträgt.

4. Automatische Einrichtung zum Ausbilden einer gekrümmten Platte nach Anspruch 2, wobei der erste Arm (530) einen verlängerten Block (532) beinhaltet, der sich von einer radialen Außenseite des ersten Arms (530) erstreckt, um die zweite Achse (X2), die die erste Achse (X1) schneidet, als eine Wellenmitte zu verwenden, und
ein Basisabschnitt (542) des zweiten Arms (540) drehbar um die zweite Achse (X2) mit dem verlängerten Block (532) verbunden ist.

5. Automatische Einrichtung zum Ausbilden einer gekrümmten Platte nach Anspruch 2, wobei die vierte Achse (X4), die ein Drehzentrum der vierten Drehachse (552) ist, an einer Stelle außerhalb des drehenden Endes (544) des zweiten Arms (540) ausgebildet ist.

6. Automatische Einrichtung zum Ausbilden einer gekrümmten Platte nach Anspruch 1, wobei ein Spaltmesssensor (600) zum Messen eines Spalts zwischen dem Heizkopf (590) und der gekrümmten Platte (2) an einer unteren Oberfläche der Bodenplatte (582) der Halterung (580) installiert ist, wobei jeder nahe drei Stellen neben einem Umfang des Heizkopfs (590) installiert ist und ein zusätzlicher einer an einer oder mehreren Stellen zwischen den drei Stellen installiert ist.

7. Automatische Einrichtung zum Ausbilden einer gekrümmten Platte nach Anspruch 1, wobei eine Mehrzahl von Formmesssensoren (700) zum Messen einer Form eines Teils der gekrümmten Platte (2) auf einer unteren Oberfläche einer Seite des Schlittens (510) installiert ist und
die Formmesssensoren (700) an fünf oder mehr Stellen in einer Querrichtung der gekrümmten Platte (2) und in zwei oder mehr Linien in einer Längsrichtung installiert sind.

8. Automatische Einrichtung zum Ausbilden einer gekrümmten Platte nach Anspruch 1, wobei ein Verformungsmesssensor (110) des Heizkopfes zum Messen der Verformung des Heizkopfes (590) in dem Träger (200) installiert ist.

9. Automatische Einrichtung zum Ausbilden einer gekrümmten Platte nach Anspruch 1, wobei ein Verformungsmesssensor (110) des Heizkopfes zum Messen der Verformung und der Position des Heizkopfes (590) in dem Träger (200) installiert ist.

## Revendications

1. Appareil automatique de formage de tôle courbée, comprenant :
un lit (100) sur lequel une tôle courbée (2) est chargée ;
un rail (102) installé dans une direction en longueur sur des côtés gauche et droit du lit (100) ;
un dispositif de transport (200) monté de façon mobile sur les deux rails (102) ;
une poutre-guide (204) installée au-dessus de deux colonnes (202) qui s'étendent vers le haut depuis chaque dispositif de transport (200) ;
un chariot (510) relié de façon mobile à la poutre-guide (204) ;
une base d'axe de rotation (520) montée sur un côté du chariot (510) ;
un bras robotique à 6 axes (500) incluant un premier bras (530) relié à la base d'axe de rotation (520) de façon rotative autour d'un premier axe (X1) ;
un dispositif de montage (580) relié à un dispositif terminal d'usinage du bras robotique (500) de façon rotative et de façon pivotante dans une direction verticale ; et
une tête de chauffage (590) montée sur un support (592) qui s'étend vers le bas depuis le dispositif de montage (580) pour réaliser un chauffage par induction haute fréquence, faisant face à la tôle courbée (2),
**caractérisé en ce que** le premier axe (X1) est perpendiculaire au côté du chariot (510) sur lequel la base d'axe de rotation (520) est montée, et le premier axe (X1) s'étend dans une direction parallèle à un sol.

2. Appareil automatique de formage de tôle courbée selon la revendication 1, dans lequel le bras robotique (500) inclut :
le premier bras (530) ;
un deuxième bras (540) relié à un côté du premier bras (530) de façon rotative autour d'un deuxième axe (X2) qui s'étend dans une direction intersectant le premier axe (X1) ;
un troisième bras (550) relié à une extrémité rotative (544) du deuxième bras (540) de façon rotative autour d'un troisième axe (X3) qui s'étend dans une direction parallèle au deuxième axe (X2) ;
un quatrième axe de rotation (552) s'étendant vers le bas depuis un côté du troisième bras (550) et installé de façon rotative autour d'un quatrième axe (X4) qui s'étend dans une direction intersectant le troisième axe (X3) ;
un cinquième bras (560) relié à une extrémité avant du quatrième axe de rotation (552) de façon rotative autour d'un cinquième axe (X5) qui s'étend dans une direction intersectant le quatrième axe (X4) ; et
un sixième axe de rotation (570) relié à une extrémité du cinquième bras (560) de façon rotative autour d'un sixième axe (X6) qui s'étend dans une direction intersectant le cinquième axe (X5), et ayant une extrémité reliée au dispositif de montage (580) pour actionner le dispositif de montage (580).

3. Appareil automatique de formage de tôle courbée selon la revendication 2, dans lequel le dispositif de montage (580) inclut une plaque de fond (582), et une plaque inclinée arrière (584) inclinée vers le haut à un angle (θ) dans une direction ascendante extérieure depuis une surface arrière de la plaque de fond (582),
une surface d'extrémité (572) du sixième axe de rotation (570) est reliée à la plaque inclinée arrière (584), faisant face à la plaque inclinée arrière (584), et
l'angle d'inclinaison (θ) de la plaque inclinée arrière (584) par rapport à la plaque de fond (582) est de 40 ° à 50 °.

4. Appareil automatique de formage de tôle courbée selon la revendication 2, dans lequel le premier bras (530) inclut un bloc étendu (532) qui s'étend depuis un côté extérieur radial du premier bras (530) pour utiliser le deuxième axe (X2), intersectant le premier axe (X1), en tant que centre d'arbre, et
une portion d'extrémité de base (542) du deuxième bras (540) est reliée au bloc étendu (532) de façon rotative autour du deuxième axe (X2).

5. Appareil automatique de formage de tôle courbée selon la revendication 2, dans lequel le quatrième axe (X4) qui est un centre de rotation du quatrième axe de rotation (552) est formé à un emplacement à l'extérieur de l'extrémité rotative (544) du deuxième bras (540).

6. Appareil automatique de formage de tôle courbée selon la revendication 1, dans lequel un capteur de mesure d'espace (600) destiné à mesurer un espace entre la tête de chauffage (590) et la tôle courbée (2) est installé sur une surface inférieure de la plaque de fond (582) du dispositif de montage (580), chacun installé à trois emplacement proximaux adjacents à un périmètre de la tête de chauffage (590) et un supplémentaire installé à un ou plusieurs emplacements entre les trois emplacements.

7. Appareil automatique de formage de tôle courbée selon la revendication 1, dans lequel une pluralité de capteurs de mesure de forme (700) destinés à mesurer une forme d'une partie de la tôle courbée (2) est installé sur une surface inférieure d'un côté du chariot (510), et
les capteurs de mesure de forme (700) sont installés à cinq, ou plus, emplacements dans une direction transversale de la tôle courbée (2) et dans deux, ou plus, lignes dans une direction longitudinale.

8. Appareil automatique de formage de tôle courbée selon la revendication 1, dans lequel un capteur de mesure de déformation de tête de chauffage (110) destiné à mesurer une déformation de la tête de chauffage (590) est installé dans le dispositif de transport (200).

9. Appareil automatique de formage de tôle courbée selon la revendication 1, dans lequel un capteur de mesure de déformation de tête de chauffage (110) destiné à mesurer une déformation et une position de la tête de chauffage (590) est installé dans le dispositif de transport (200).
